(19)

Europäisches
Patentamt
European
Patent Office
Office européen
des brevets

(11) **EP 3 054 612 A1**

(12) **EUROPEAN PATENT APPLICATION**
published in accordance with Art. 153(4) EPC

(43) Date of publication:
**10.08.2016 Bulletin 2016/32**

(21) Application number: **13894461.6**

(22) Date of filing: **30.09.2013**

(51) Int Cl.:
***H04L 1/00*** *(2006.01)*

(86) International application number:
**PCT/CN2013/084797**

(87) International publication number:
**WO 2015/042986 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
• **SONG, Lei
Beijing 100025 (CN)**
• **ZHANG, Jian
Beijing 100025 (CN)**
• **ZHANG, Yi
Beijing 100025 (CN)**
• **ZHOU, Hua
Beijing 100025 (CN)**

(74) Representative: **Lewin, David Nicholas
Haseltine Lake LLP
Lincoln House, 5th Floor
300 High Holborn
London WC1V 7JH (GB)**

(54) **INFORMATION FEEDBACK METHOD, CODEBOOK DETERMINATION METHOD, USER EQUIPMENT AND BASE STATION**

(57)      Provided with an information feedback method, a codebook determination method, UE and a Base Station. The information feedback method includes feeding back, by UE, related information to a BS when transmission of one or more data stream(s) is supported in both horizontal and vertical directions of an antenna array, the related information comprising one or more pieces of the following information: a number of data streams supported in the vertical direction, a number of data streams supported in the horizontal direction, and a total number of data streams supported by the UE; when a number of data streams supported in the horizontal direction or the vertical direction is a constant value, the related information includes any of the following information: a number of data stream supported in the vertical direction and a total number of data streams supported by the UE, or the related information includes any of the following information: a number of data streams supported in the horizontal direction and a total number of data streams supported by the UE. With the method, it is possible to reduce the signaling overhead of a single time of feedback and to decrease the size of a precoding matrix.

**FIG. 3**

**Description**

<u>Technical Field</u>

The present disclosure relates to the field of communications and, in particular to an information feedback method, a codebook determination method, UE and a base station.

<u>Background</u>

A multiple input multiple output (MIMO) technology is one of important physical layer technologies for a long-term evolution advanced (LTE-Advanced) system, which is used for providing spatial diversity gains, spatial multiplexing gains and array gains. The MIMO technology adopts a horizontally placed one-dimensional (1D) linear array both in LTE version 11 of the third-generation Cooperation Organization (3GPP) radio access network workgroup 1 and in the previous art, and has the adaptive ability in the horizontal plane, namely, a two-dimensional (2D) MIMO technology.

A 2D planar array is introduced in the study of version 12, which is capable of providing adaptive control both in the horizontal and elevating dimension in combination with an active antenna system (AAS) related art in order to better improve system performance, namely, a three-dimensional (3D) MIMO technology.

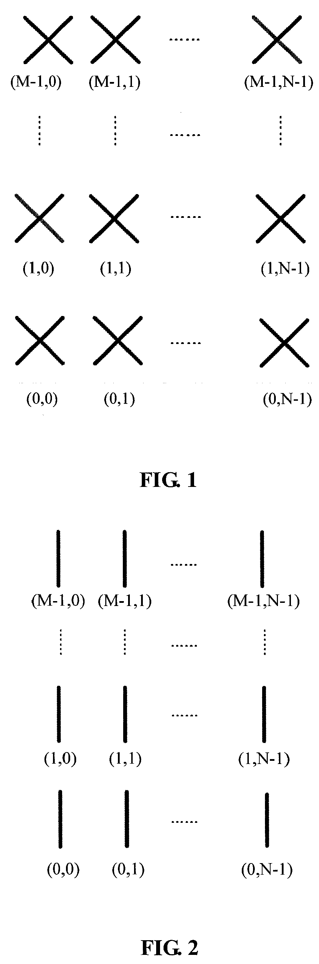

Figure 1 is a schematic diagram of a structure of a cross-polarized two-dimensional planar array; and Figure 2 is a schematic diagram of a structure of a uniform-linear two-dimensional planar array.

In Figure 1, M cross-polarized antenna pairs are placed in each column of the vertical direction, and a distance between the antennas in the same polarization direction is dv; N columns of cross-polarized antenna pairs are placed in the horizontal direction, and a distance between the antennas in the same polarization direction is $d_H$. The typical values of $d_V$ and $d_H$ could be $0.5\lambda$ or $0.8\lambda$ etc.

In Figure 2, M antennas in the same polarization direction are placed in each column of the vertical direction (such as vertical polarized antennas in Figure 2), and N columns of antenna are placed in the horizontal direction; wherein distances between the antennas in the vertical direction and the horizontal direction are dv and $d_H$ respectively.

It should be noted that the above introduction to the background is given for the clear and complete description of the technical solution of the present disclosure and for the understanding by those skilled in the art. The above technical solutions should not be deemed as being known to those skilled in the art for having been described in the background of the present disclosure.

<u>Summary</u>

In the above two configuration shown in Figures 1 and 2, the number of antenna ports in the horizontal direction could be identical with that in previous versions of LTE, such as 1, 2, 4, or 8 etc. A plurality of physical antennas (pairs) in the vertical direction may be virtualized into one physical antenna port, so as to reduce the number of antenna ports for transmitting a reference signal. When the number of antenna ports in the vertical direction is 1, the 2D planar array is converted into a conventional 1D array and the 3D MIMO technology is correspondingly converted into the 2D MIMO technology. When the number of antenna ports in the vertical direction is larger than 1, a transmitting signal may be adjusted in the horizontal plane and the vertical plane by making full use of the 3D MIMO technology; however, the total number of antenna ports is much larger than the number of ports of previous versions, which directly causes an increase in a size of a precoding codebook and a significant increase in signaling overhead.

Therefore, the embodiments of the present disclosure provide an information feedback method, a codebook determination method, UE and a base station; wherein, by performing the channel state information (CSI) feedback separately in the horizontal and vertical directions, the size of a precoding codebook and the signaling overhead of a single time of feedback could be reduced; furthermore, a CSI feedback method in a horizontal direction in the previous versions of LTE could be re-used.

According to a first aspect of the embodiments of the present disclosure, there is provided an information feedback method, the method including:

feeding back, by User Equipment (UE), related information to a Base Station (BS) when transmission of one or more data streams is supported in both horizontal and vertical directions of an antenna array, the related information comprising two or more pieces of the following information: a number of data streams supported in the vertical direction, a number of data streams supported in the horizontal direction, and a total number of data streams supported by the UE; or
feeding back, by UE, related information to a BS when a number of data streams supported in a vertical direction is a constant value, the related information comprising any of the following information: a number of data streams supported in a horizontal direction and a total number of data streams supported by the UE; or

feeding back, by UE, related information to a BS when a number of data streams supported in a horizontal direction is a constant value, the related information comprising any of the following information: a number of data streams supported in a vertical direction and a total number of data streams supported by the UE.

According to a second aspect of the embodiments of the present disclosure, there is provided an information feedback method, the method including:

receiving, by a BS, related information fed back by UE, the related information comprising two or more pieces of the following information: a number of data streams supported in a vertical direction, a number of data streams supported in a horizontal direction, and a total number of data streams supported by the UE; or
receiving, by a BS, related information fed back by UE when a number of data streams supported in a vertical direction is a constant value, the related information comprising any of the following information: a number of data streams supported in a horizontal direction and a total number of data streams supported by the UE; or
receiving, by a BS, related information fed back by the UE when a number of data streams supported in a horizontal direction is a constant value, the related information comprising any of the following information: a number of data stream supported in a vertical direction and a total number of data streams supported by the UE.

According to a third aspect of the embodiments of the present disclosure, there is provided UE, the UE including:

a feedback unit configured to feed back related information to a Base Station (BS) when transmission of one or more data streams is supported in both horizontal and vertical directions of an antenna array, the related information comprising two or more pieces of the following information: a number of data streams supported in the vertical direction, a number of data streams supported in the horizontal direction, and a total number of data streams supported by the UE; or
a feedback unit configured to feed back related information to a BS when a number of data streams supported in a vertical direction is a constant value, the related information comprising any of the following information: a number of data streams supported in a horizontal direction and a total number of data streams supported by the UE; or
a feedback unit configured to feed back related information to a BS when a number of data streams supported in a horizontal direction is a constant value, the related information comprising any of the following information: a number of data streams supported in a vertical direction and a total number of data streams supported by the UE.

According to a fourth aspect of the embodiments of the present disclosure, there is provided a BS, the BS including:

a first receiving unit configured to receive related information fed back by UE, the related information comprising two or more pieces of the following information: a number of data streams supported in a vertical direction, a number of data streams supported in a horizontal direction, and a total number of data streams supported by the UE; or
a first receiving unit configured to receive related information fed back by UE when a number of data streams supported in a vertical direction is a constant value, the related information comprising any of the following information: a number of data streams supported in a horizontal direction and a total number of data streams supported by the UE; or
a first receiving unit configured to receive related information fed back by the UE when a number of data streams supported in a horizontal direction is a constant value, the related information comprising any of the following information: a number of data streams supported in a vertical direction and a total number of data streams supported by the UE.

According to a fifth aspect of the embodiments of the present disclosure, there is provided a codebook determination method, a dual-codebook structure is used for both horizontal and vertical directions of an antenna array, the method including:

determining a long-term and/or wideband codebook by taking a combination of long-term and/or wideband codewords in the horizontal and vertical directions, or taking long-term and/or wideband codewords in the horizontal and vertical directions, as a long-term and/or wideband precoding matrix; and determining an instant and/or narrowband codebook by taking a combination of instant and/or narrowband codewords in the horizontal and vertical directions as an instant and/or narrowband precoding matrix; or
determining a long-term and/or wideband codebook by taking long-term and/or wideband codewords in the horizontal and vertical directions as a wideband precoding matrix, and determining an instant and/or narrowband codebook by taking a combination of instant and/or narrowband codewords in the horizontal and vertical directions as an instant and/or narrowband precoding matrix.

According to a sixth aspect of the embodiments of the present disclosure, there is provided a codebook determination method, which a dual-codebook structure for a horizontal direction of an antenna array and a single-codebook structure is used for a vertical direction thereof, the method including:

determining a long-term and/or wideband codebook by taking a combination of long-term and/or wideband codewords in the horizontal direction and precoding codewords in the vertical direction, or taking long-term and/or wideband codewords in the horizontal direction, as a long-term and/or wideband precoding matrix; and determining an instant and/or narrowband codebook by taking a combination of instant and/or narrowband codewords in the horizontal direction and the precoding codewords in the vertical direction as an instant and/or narrowband precoding matrix; or determining a long-term and/or wideband codebook by taking long-term and/or wideband codewords in the horizontal direction as a long-term and/or wideband precoding matrix, and determining an instant and/or narrowband codebook by taking a combination of instant and/or narrowband codewords in the horizontal direction and precoding codewords in the vertical direction as an instant and/or narrowband precoding matrix.

According to a seventh aspect of the embodiments of the present disclosure, there is provided a codebook determination apparatus, the apparatus including:

a first codebook determination unit configured to determine a long-term and/or wideband codebook by taking a combination of long-term and/or wideband codewords in horizontal and vertical directions, or taking long-term and/or wideband codewords in horizontal and vertical directions, as a long-term and/or wideband precoding matrix; and to determine an instant and/or narrowband codebook by taking a combination of instant and/or narrowband codewords in the horizontal and vertical directions as an instant and/or narrowband precoding matrix; or to determine a long-term and/or wideband codebook by taking long-term and/or wideband codewords in horizontal and vertical directions as a long-term and/or wideband precoding matrix, and to determine an instant and/or narrowband codebook by taking a combination of instant and/or narrowband codewords in the horizontal and vertical directions as an instant and/or narrowband precoding matrix.

According to an eighth aspect of the embodiments of the present disclosure, there is provided a codebook determination apparatus, the apparatus including:

a second codebook determination unit configured to determine a long-term and/or wideband codebook by taking a combination of long-term and/or wideband codewords in a horizontal direction and precoding codewords in a vertical direction, or taking long-term and/or wideband codewords in a horizontal direction, as a long-term and/or wideband precoding matrix; and to determine an instant and/or narrowband codebook by taking a combination of instant and/or narrowband codewords in the horizontal direction and the precoding codewords in the vertical direction as an instant and/or narrowband precoding matrix; or to determine a long-term and/or wideband codebook by taking long-term and/or wideband codewords in a horizontal direction as a long-term and/or wideband precoding matrix, and to determine an instant and/or narrowband codebook by taking a combination of instant and/or narrowband codewords in the horizontal direction and precoding codewords in a vertical direction as an instant and/or narrowband precoding matrix.

According to a ninth aspect of the embodiments of the present disclosure, there is provided an information feedback method, the method including:

feeding back to a BS, by UE, serial numbers of determined long-term and/or wideband codebook and instant and/or narrowband codebook in predetermined codebooks according to a feedback type by using a time-frequency resource determined in a feedback mode description, when the UE performs an aperiodic feedback; and feeding back to the BS, by the UE, the serial numbers of the determined long-term and/or wideband codebook and instant and/or narrowband codebook in the predetermined codebooks according to the feedback type separately or in combination with other feedback content by using the time-frequency resource determined in the feedback mode description, when the UE performs a periodic feedback, the predetermined codebooks being determined according to the method of claim 11 or 12.

According to a tenth aspect of the embodiments of the present disclosure, there is provided UE, the UE including:

an information feedback unit configured to feed back to a BS serial numbers of determined long-term and/or wideband codebook and instant and/or narrowband codebook in predetermined codebooks according to a feedback type by using a time-frequency resource determined in a feedback mode description, when the UE performs an aperiodic feedback; and

to feed back to the BS the serial numbers of the determined long-term and/or wideband codebook and instant and/or narrowband codebook in the predetermined codebooks according to the feedback type separately and/or in combination with other feedback content by using the time-frequency resource determined in the feedback mode description, when the UE performs a periodic feedback,

the predetermined codebooks being determined according to the method of claim 11 or 12.

According to an eleventh aspect of the embodiments of the present disclosure, there is provided an information feedback method, the method including:

jointly encoding, by UE, related indication information concerned in a feedback performed separately in horizontal and vertical directions ; and

sending the jointly encoded information to a network side;

wherein, the related indication information comprises one or more pieces of the following information:

a total number of data streams, a rank indication in a horizontal direction, a rank indication in a vertical direction, a precoding matrix indication in a horizontal direction, a precoding matrix indication in a vertical direction and a precoding type indication; or

when a dual-codebook structure is used, the related indication information comprises one or more pieces of the following information:

a total number of data streams, a rank indication in a horizontal direction, a rank indication in a vertical direction, a precoding type indication, a long-term and/or wideband precoding matrix indication in a horizontal direction, an instant and/or narrowband precoding matrix indication in a horizontal direction, a long-term and/or wideband precoding matrix indication in a vertical direction, an instant and/or narrowband precoding matrix indication in a vertical direction, a precoding matrix indication taking a combination of long-term and/or wideband codewords in horizontal and vertical directions as a long-term and/or wideband precoding matrix, a precoding matrix indication taking a combination of instant and/or narrowband codewords in horizontal and vertical directions as an instant and/or narrowband precoding matrix, a precoding matrix indication taking a combination of long-term and/or wideband codewords in a horizontal direction and precoding codewords in a vertical direction as a long-term and/or wideband precoding matrix, and a precoding matrix indication taking a combination of instant and/or narrowband codewords in a horizontal direction and precoding codewords in a vertical direction as an instant and/or narrowband precoding matrix.

According to a twelfth aspect of the embodiments of the present disclosure, there is provided UE, the UE including:

an encoding unit configured to jointly encode related indication information concerned in a feedback performed separately in horizontal and vertical directions ; and

a sending unit configured to send jointly encoded information to a network side;

wherein, the related indication information comprises one or more pieces of the following information:

a total number of data streams, a rank indication in a horizontal direction, a rank indication in a vertical direction, a precoding matrix indication in a horizontal direction, a precoding matrix indication in a vertical direction and a precoding type indication; or

when a dual-codebook structure is used, the related indication information comprises one or more pieces of the following information:

a total number of data streams, a rank indication in a horizontal direction, a rank indication in a vertical direction, a precoding type indication, a long-term and/or wideband precoding matrix indication in a horizontal direction, an instant and/or narrowband precoding matrix indication in a horizontal direction, a long-term and/or wideband precoding matrix indication in a vertical direction, an instant and/or narrowband precoding matrix indication in a vertical direction, a precoding matrix indication taking a combination of long-term and/or wideband codewords in horizontal and vertical directions as a long-term and/or wideband precoding matrix, a precoding matrix indication taking a combination of instant and/or narrowband codewords in horizontal and vertical directions as an instant and/or narrowband precoding matrix, a precoding matrix indication taking a combination of long-term and/or wideband codewords in a horizontal direction and precoding codewords in a vertical direction as a long-term and/or wideband precoding matrix, and a precoding matrix indication taking a combination of instant and/or narrowband codewords in a horizontal direction and precoding codewords in a vertical direction as an instant and/or narrowband precoding matrix.

According to a thirteenth aspect of the embodiments of the present disclosure, there is provided a codebook determination method, the method including:

determining a system codebook set; and
determining, according to the system codebook set and an internal region or an external region of a cell where UE is located, corresponding codebook subsets in the internal region and the external region.

According to a fourteenth aspect of the embodiments of the present disclosure, there is provided a codebook determination apparatus, the apparatus including:

a first codebook determination unit configured to determine a system codebook set;
a second codebook determination unit configured to determine, according to the system codebook set and an internal region or an external region of a cell where UE is located, corresponding codebook subsets in the internal region and the external region.

According to a fifteenth aspect of the embodiments of the present disclosure, there is provided a computer readable program, wherein when being executed in UE, the program enables a computer to perform the information feedback method as described in the first or the ninth or the eleventh aspect in the UE.
According to a sixteenth aspect of the embodiments of the present disclosure, there is provided a storage medium which stores a computer readable program, wherein the computer readable program enables a computer to perform the information feedback method as described in the first or the ninth or the eleventh aspect in UE.
According to a seventeenth aspect of the embodiments of the present disclosure, there is provided a computer readable program, wherein when being executed in a BS, the program enables a computer to perform the information feedback method as described in the second aspect in the BS.
According to an eighteenth aspect of the embodiments of the present disclosure, there is provided a storage medium which stores a computer readable program, wherein the computer readable program enables a computer to perform the information feedback method as described in the second aspect in a BS.
According to a nineteenth aspect of the embodiments of the present disclosure, there is provided a computer readable program, wherein when being executed in a codebook determination apparatus, the program enables a computer to perform the codebook determination method as described in the fifth or the sixth or the thirteenth aspect in the codebook determination apparatus.
According to a twentieth aspect of the embodiments of the present disclosure, there is provided a storage medium which stores a computer readable program, wherein the computer readable program enables a computer to perform the codebook determination method as described in the fifth or the sixth or the thirteenth aspect in a codebook determination apparatus.
An advantage of the embodiments of the present disclosure exists in that, by performing the CSI feedback separately in the horizontal and vertical directions, the signaling overhead of single time of feedback could be reduced, and in addition, the size of a precoding codebook could be reduced.
Particular embodiments of the present disclosure will be described in detail below with reference to the following description and attached drawings and the manners of using the principle of the present disclosure are pointed out. It should be understood that the implementation of the present disclosure is not limited thereto in scope. Rather, the disclosure includes all changes, modifications and equivalents coming within the terms of the appended claims.
Features which are described and/or illustrated with respect to one embodiment may be used in the same way or in a similar way in one or more other embodiments and/or in combination with or instead of the features of the other embodiments.
It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:

Figure 1 is a schematic diagram of a structure of a cross-polarized two-dimensional planar antenna array;
Figure 2 is a schematic diagram of a structure of a uniform-linear two-dimensional planar antenna array;
Figure 3 is a flowchart of an information feedback method of Embodiment 2 of the present disclosure;
Figure 4 is a flowchart for determining a precoding matrix of Embodiment 2 of the present disclosure;
Figure 5 is a flowchart for determining a composite precoding matrix of Embodiment 2 of the present disclosure;
Figure 6 is a schematic diagram of a structure of UE of Embodiment 3 of the present disclosure;
Figure 7 is a schematic diagram of a structure of a BS of Embodiment 4 of the present disclosure;
Figure 8 is a schematic diagram of a structure of a first processing unit of Embodiment 4 of the present disclosure;
Figure 9 is a schematic diagram of a structure of a second processing unit of Embodiment 4 of the present disclosure;
Figure 10 is a schematic diagram of a structure of a BS of Embodiment 4 of the present disclosure;
Figure 11 is a flowchart of an information feedback method of Embodiment 11 of the present disclosure;
Figure 12 is a schematic diagram of a structure of UE of Embodiment 12 of the present disclosure;
Figure 13 is a flowchart of a codebook determination method of Embodiment 13 of the present disclosure;
Figure 14 is a schematic diagram of division of an internal region and an external region of a BS of Embodiment 14 of the present disclosure; and
Figure 15 is a schematic diagram of a structure of a codebook determination apparatus of Embodiment 14 of the present disclosure;

Detailed Description

Various embodiments of the present disclosure shall be described as follows with reference to the drawings. These embodiments are just exemplary rather than limitations to the present disclosure. In order to make the principle and the embodiments of the present disclosure be more easily understood by those skilled in the art, the embodiments of the present disclosure will be described by taking an information feedback method and a codebook determination method in an LTE system as an example. It shall be appreciated that the present disclosure is not limited to the above system, and is also suitable for other systems concerning information feedback and codebook determination.

In order to solve the above technical problem, in the embodiments of the present disclosure, when preforming channel state information (CSI) feedback, the number of the supported data streams and/or corresponding precoding matrix indication are fed back in horizontal and vertical directions respectively, to be adaptive to an antenna configuration scenario where the number of antenna ports is relatively large. However, CQI feedback is not differentiated in the horizontal and vertical directions, and the CQI is fed back via a current CSI feedback manner. In addition, an RI and a PMI will not be described in detail herein.

The embodiments of the present disclosure are described as follows with reference to the drawings.

Embodiment 1

Embodiment 1 of the present disclosure provides an information feedback method, including: feeding back, by User Equipment (UE), related information to a Base Station (BS) when transmission of one or more data streams is supported in both horizontal and vertical directions of an antenna array;

wherein, the related information includes two or more pieces of the following information: a number of data streams supported in the vertical direction, a number of data streams supported in the horizontal direction, and a total number of data streams supported by the UE.

In this embodiment, the total number of data streams may be represented as a total rank indicator (RI), the number of data streams in the horizontal direction may be represented as $N_H$ (an RI in the horizontal direction), and the number of data streams in the vertical direction may be represented as Nv (an RI in the vertical direction).

It can be known from the above embodiment that, when one or more data streams are supported in both horizontal and vertical directions, the UE may feedback any two of RI, $N_H$ and Nv or feedback all of them; in this situation, in a base station side, if receiving any two of RI, $N_H$ and Nv fed back by the UE, the BS may estimate the number of another data streams based on the any two thereof. For example, when the UE feeds back RI and $N_H$, the BS estimates $N_V$ based on the RI and $N_H$; or when the UE feeds back $R_I$ and $N_V$, the BS estimates $N_H$ based on the RI and $N_{Vv}$; or when the UE feeds back Nv and $N_H$, the BS estimates RI based on the Nv and $N_H$.

In addition, when the number Nv of data streams supported in the vertical direction is a constant value, the UE may feedback any one of the number $N_H$ of data streams supported in a horizontal direction and the total number RI of data streams supported by the UE; or when the number $N_H$ of data streams supported in the horizontal direction is a constant value, the UE may feedback any one of the number Nv of data streams supported in a vertical direction and the total number RI of data streams supported by the UE.

In this situation, in the BS side, if receiving any one of RI, $N_H$ and Nv fed back by the UE, the BS may estimate the number of other two data streams according to a predetermined manner. For example, when the number of data streams supported in the horizontal direction or the vertical direction is a constant value, the number of data streams in the horizontal direction or the vertical direction may be preconfigured (e.g., configured via higher layer signaling), in this way, the UE side and the BS side may learn the constant value; in this situation, when receiving one data stream number fed back by the UE, the BS may learn the two data stream numbers based on the preconfigured value and the one data stream number fed back by the UE, and estimate another data stream number which is not fed back according to the two data stream numbers.

For example, when the number of data streams in the horizontal direction is 1, that is, the data steam in the horizontal direction is transmitted at rank=1, the UE may feedback RI or Nv; and when the number of data streams in the vertical direction is 1, that is, the data steam in the vertical direction is transmitted at rank=1, the UE may feedback RI or $N_H$. In this situation, the constant value "1" may be preconfigured via high layer signaling, so as to make the UE side and the BS side to learn the number of data streams in the horizontal or vertical direction, in this way, after receiving the related information fed back by the UE, the BS may estimate another data stream number which is not fed back according to the related information and the preconfigured constant value. In this embodiment, the constant value "1" is merely illustrative, that is to say, the constant value may be other values according to an actual situation, such as 2 or 4 etc.

In this embodiment, besides feeding back the above related information, the UE may feedback a precoding matrix indication Iv in the vertical direction and a precoding matrix indication $I_H$ in the horizontal direction. It should be understood that the information is alternative information; for example, the information may be fed back when a precoding matrix is determined in the BS station, and may not be fed back when another operation is performed in the BS side without requiring the above information.

In this embodiment, the above related information is fed back to the BS side as the CSI, such that the BS station may determine the number of data streams in the horizontal and vertical directions according to the related information, or further to determine a precoding matrix in the horizontal and vertical directions and a composite precoding matrix.

It can be known from the above embodiment, by feeding back the total number of data streams, and/or the number of data streams in the horizontal and/or vertical directions, and/or a precoding matrix indication, the signaling overhead may be reduced and the size of a precoding matrix may be decreased.

Embodiment 2

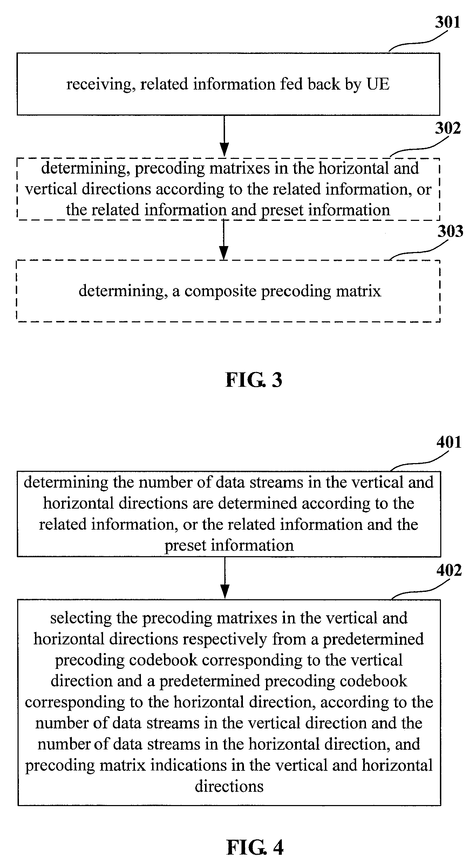

Figure 3 is a flowchart of an information feedback method of Embodiment 2 of the present disclosure. As shown in Figure 3, the method includes:

Step 301, receiving related information fed back by UE;

in this embodiment, the related information is similar to the information in Embodiment 1, which is not described redundantly.

It can be known from the above embodiment, the BS may obtain the related information fed back by the UE, such that the BS may use the information on demand.

In this embodiment, after receiving the related information, the BS may determine the number of data streams in the horizontal and vertical directions according to the related information or the related information and the preconfigured constant value, or may further determine the total number of data streams supported by the UE, as described in Embodiment 1, which shall be described below by way of examples, but not be described herein any further.

In this embodiment, when the BS side determines precoding matrixes in the horizontal and vertical directions or further determines composite a precoding matrix, the method further includes:

Step 302, determining precoding matrixes in the horizontal and vertical directions according to the related information, or the related information and preset information;

in this embodiment, a precoding matrix in the horizontal direction may be represented as $W_H$, and a precoding matrix in the vertical direction may be represented as Wv.

It can be known from the above embodiment, the BS may determine the precoding matrixes in the horizontal and vertical directions according to the related information reported by the UE.

In this embodiment, after step 302, the method may further include:

Step 303, determining a composite precoding matrix (i.e., a total precoding matrix).

In this embodiment, in step 302, when determining the precoding matrixes in the horizontal and vertical directions according to the related information, the process shown in Figure 4 may be adopted.

It can be known from the above embodiment, steps 302 and 303 are alternative steps, and the steps are preformed when the BS determines the precoding matrixes and may not be performed when the above operations are not preformed.

Figure 4 is a flowchart for determining a precoding matrix of Embodiment 2 of the present disclosure. As shown in Figure 4, the process includes:

Step 401, determining the number of data streams in the vertical and horizontal directions according to the related information, or the related information and the preset information;

in this embodiment, for example, when the related information fed back by the UE is RI and $N_H$, the BS estimates $N_V$ based on RI and $N_H$, such as, $N_V = \lfloor RI/N_H \rfloor$ or $N_V = \lceil RI/N_H \rceil$; where, $\lfloor \ \rfloor$ and $\lceil \ \rceil$ represent a down rounding operation and a up rounding operation respectively; or when the related information fed back by the UE is RI and Nv, the BS estimates $N_H$ based on RI and $N_V$, such as, $N_V = \lfloor RI/N_V \rfloor$ or $N_V = \lceil RI/N_V \rceil$; or when the related information fed back by the UE is $N_H$ and Nv, the BS may directly determine the $N_H$ and Nv; in addition, the BS may further estimate the total number RI of data streams based on the $N_H$ and Nv, such as RI=$N_H N_V$;

in this embodiment, when the number of data streams in the horizontal direction is a constant value, such as 1, that is, the data steam in the horizontal direction is transmitted at rank=1, the UE may feedback RI or Nv; the information which is not fed back may be estimated by feedback information and preconfigured information, such as information configured via high layer signaling and information fed back by the UE, for example, when configuring via a high layer signaling that the data steam in the horizontal direction is transmitted at rank=1, Nv which is not fed back is equal to RI; and when the number of data stream in the vertical direction is 1, that is, the data steam in the vertical direction is transmitted at rank=1, the UE may feedback RI or $N_H$, similarly, the information which is not fed back may be estimated by information configured via high layer signaling and information fed back by the UE.

Step 402, selecting the precoding matrixes Wv and $W_H$ in the vertical and horizontal directions respectively from a predetermined precoding codebook corresponding to the vertical direction and a predetermined precoding codebook corresponding to the horizontal direction, according to the number Nv of data streams in the vertical direction and the number $N_H$ of data streams in the horizontal direction, and precoding matrix indications in the vertical and horizontal directions;

in this embodiment, precoding codebooks may be determined respectively in the horizontal and vertical directions, in this way, the size of the precoding matrix may be decreased;

in this embodiment, a precoding matrix indication (PMI) in the horizontal direction may be represented as $I_H$, and a precoding matrix indication in the vertical direction may be represented as Iv. The $I_H$ and $I_V$ may be fed back by the UE.

It can be known from the above embodiment, the precoding matrixes in the horizontal and vertical directions are determined by feeding back the total number of data streams, and/or the number of data streams in the horizontal direction, and/or the number of data streams in the vertical direction, precoding matrix indications in the horizontal and vertical directions, whereby the size of a precoding matrix may be reduced.

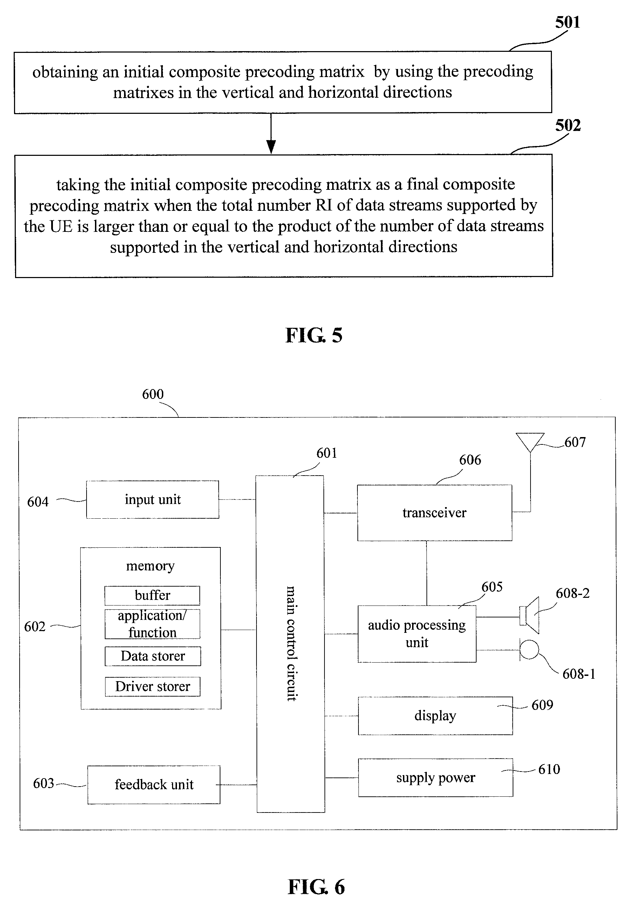

In this embodiment, in step 303, when determining a composite precoding matrix, the process is as shown in Figure 5.

Figure 5 is a flowchart for determining a composite precoding matrix of Embodiment 2 of the present disclosure. As shown in Figure 5, the method includes:

Step 501, obtaining an initial composite precoding matrix W by using the precoding matrixes Wv and $W_H$ in the vertical and horizontal directions, wherein the initial composite precoding matrix W has a predetermined number of orthogonal column vectors, and the predetermined number is a product ($N_H N_V$) of the number of data streams in the vertical and horizontal directions;

in this embodiment, the precoding matrixes $W_V$ and $W_H$ in the vertical and horizontal directions may be processed to obtain the initial composite precoding matrix W (also referred to a total precoding matrix W);

for example, W=f($W_H$, $W_V$), where, f(.) represents a specific function, such as matrix convolution, matrix Kronecker product, or Hadamard product etc.

Step 502, taking the initial composite precoding matrix as a final composite precoding matrix when the total number RI of data streams supported by the UE is larger than or equal to the product ($N_H N_V$) of the number of data streams supported in the vertical and horizontal directions;

the BS abandons, among the predetermined number ($N_H N_V$) of orthogonal column vectors, a certain number of ones, and takes remaining orthogonal column vectors as a final composite precoding matrix when the total number of data streams supported by the UE is smaller than the product ($N_HN_V$) of the number of data streams supported in the vertical and horizontal directions; the certain number ($RI-N_HN_V$) being obtained by subtracting the product of the number of data streams supported in the vertical and horizontal directions from the total number of data streams supported by the UE; in this embodiment, the RI may be fed back by the UE; or the RI may be determined according to the $N_H$ and Nv fed back by the UE when the UE does not feed back the RI; or the RI may be determined according to $N_H$ or Nv fed back by the UE and the number of data streams 1 when the number of data streams in the horizontal or vertical direction is 1.

In this embodiment, the method may further include the following step: transmitting, by the BS, indication information to the UE, to indicate a feedback mechanism by the indication information. In this way, the UE may feed back the related information according to the indication information after receiving the indication information, and the BS may determine the precoding matrixes in the horizontal and vertical directions or the composite precoding matrix by using a corresponding processing mode according to a preconfigured feedback after receiving the related information.

In this embodiment, the above indication information (feedback information), i.e., the information fed back by the UE, maybe configured via RRC signaling, but it is not limited thereto, and the indication information may be configured via other existing information or newly-established signaling.

It can be known from the above embodiment that a composite precoding matrix may be determined according to precoding matrixes in the horizontal and vertical directions, whereby the size of the precoding matrixes may be reduced.

Embodiment 3

Embodiment 3 of the present disclosure provides UE, including: a feedback unit configured to feed back related information to a Base Station (BS) when transmission of one or more data streams is supported in both horizontal and vertical directions of an antenna array.

In this embodiment, the related information is as described in Embodiment 1, which shall not be described herein any further.

In this embodiment, besides the feedback unit, the UE may further include common technical features to existing UE; for example, the UE may be a mobile phone and the figure 6 is illustrative only. For example, a mobile phone 600 may further include other types of circuit components, to supplement or replace the operation circuit, so as to realize the communication function or other functions. It is obvious that the mobile phone 600 does not necessarily include all the components shown in Figure 6.

Figure 6 is a schematic diagram of a structure of UE of Embodiment 3 of the present disclosure. As shown in Figure 6, the UE 600 includes a feedback unit 603, in addition, the mobile phone 600 may include a main control circuit 601, a transceiver 606, an antenna 607, an input unit 604, an audio processing unit 607, a memory 602, a display 609, and a supply power 610. The main control circuit 601 is sometimes referred to as a controller or an operating control, and may include a microprocessor or other processor devices and/or logic devices. The main control circuit 601 receives an input and controls the operations of every components of the mobile phone 600. In this embodiment, the memory 602 may be, for example, one or more of a buffer, a flash memory, a hard drive, a removable medium, a volatile memory, nonvolatile memory, or other suitable devices, which may store the information feedback program. And the main control circuit 601 may execute the program stored in the memory 602, so as to realize the information feedback. Functions of other components are similar to those of the prior art, which shall not be described herein any further

The components of the mobile phone 600 may be implemented by specific hardware, firmware, software, or any combination thereof, without departing from the scope of the present disclosure.

It can be known from the above embodiment that by feeding back the total number of data streams, and/or the number of data streams in the horizontal and/or vertical directions, and/or precoding matrix indications in the horizontal and vertical directions, the size of the precoding matrixes may be reduced, and signaling overhead of a single time of feedback may be decreased.

Embodiment 4

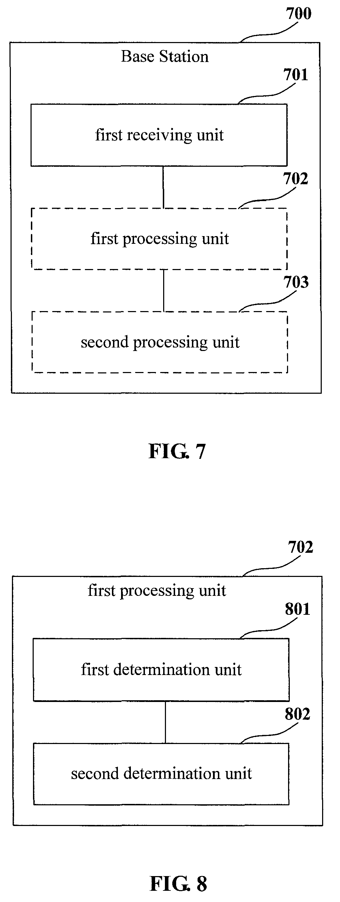

Figure 7 is a schematic diagram of a structure of a BS of Embodiment 4 of the present disclosure. As shown in Figure 7, a BS 700 includes a first receiving unit 701 configured to receive related information fed back by UE; wherein, the related information is as described in Embodiment 1, which shall not be described herein any further.

Accordingly, the BS 700 may determine the number of data streams in the horizontal and vertical directions according to the related information or the related information and preset information, or may further learn the total number of data streams. In this case, the BS 700 may include an information determination unit configured to determine the number of data streams in the horizontal and vertical directions according to the related information or the related information and preset information, or may further learn the total number of data streams.

In this embodiment, when the BS determines a precoding matrix, the BS 700 may further include a first processing unit 702; wherein,

the first processing unit 702 is configured to determine precoding matrixes in the horizontal and vertical directions according to the related information, or the related information and preset information.

In this embodiment, the first processing unit 702 may include a first determination unit 801 and a second determination unit 802; wherein, the first determination unit 801 is configured to determine the number of data streams in the vertical and horizontal directions according to the related information, or the related information and the preset information; and the second determination unit 802 is configured to select the precoding matrixes $W_V$ and $W_H$ in the vertical and horizontal directions, respectively, from a predetermined precoding codebook corresponding to the vertical direction and a predetermined precoding codebook corresponding to the horizontal direction, according to the number of data streams in the vertical and horizontal directions, and precoding matrix indications in the vertical and horizontal directions. The specific determining process is as described in the Embodiment 2, and shown in Figure 4, which shall not be described herein any further.

In this embodiment, after the first processing unit 702 determines precoding matrixes in the horizontal and vertical direction, the BS 700 may further include a second processing unit 703 configured to determine a composite precoding matrix.

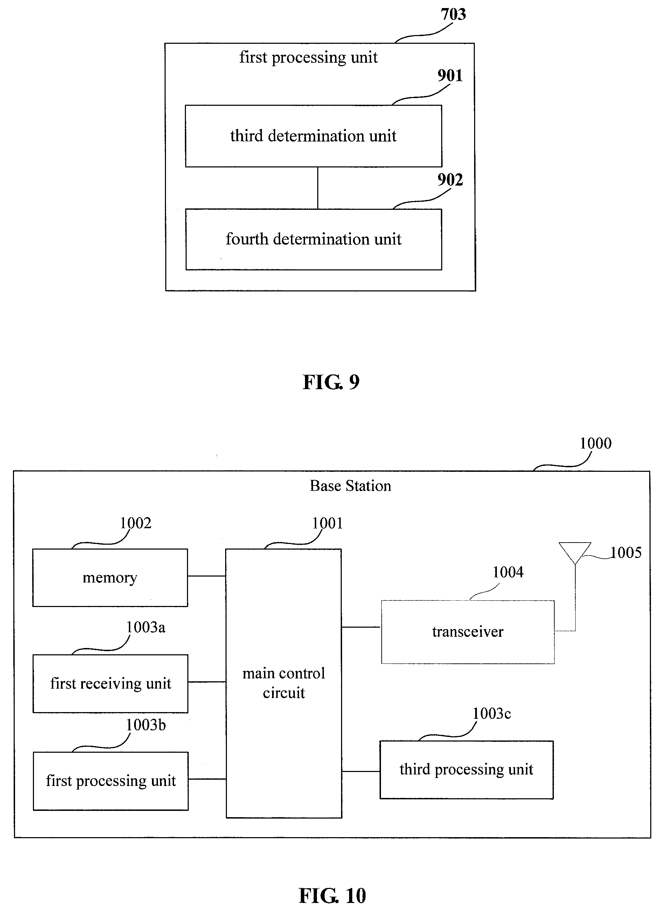

Figure 9 is a schematic diagram of a structure of a second processing unit of Embodiment 4 of the present disclosure. As shown in Figure 9, a second processing unit 603 includes a third determination unit 901 and a fourth determination unit 902; wherein,

the third determination unit 901 is configured to obtain an initial composite precoding matrix W by using the precoding matrixes $W_V$ and $W_H$ in the vertical and horizontal directions, the initial composite precoding matrix having a predetermined number of orthogonal column vectors, and the predetermined number being a product ($N_H N_V$) of the number of data streams in the vertical and horizontal directions; and

the fourth determination unit 902 is configured to take the initial composite precoding matrix as a final composite precoding matrix when the total number of data streams supported by the UE is larger than or equal to the product of the number of data streams supported in the vertical and horizontal directions;

to abandon, among the predetermined number of orthogonal column vectors, a certain number of ones, and to take remaining orthogonal column vectors as a final composite precoding matrix when the total number of data streams supported by the UE is smaller than the product of the number of data streams supported in the vertical and horizontal directions; the certain number ($RI-N_H N_V$) being obtained by subtracting the product of the number of data streams supported in the vertical and horizontal directions from the total number of data streams supported by the UE.

In this embodiment, the BS 700 may further include a configuration unit (not shown) configured to transmit indication information to the UE, to indicate a feedback mechanism by the indication information. In this way, the UE may feed back the related information according to the indication information after receiving the indication information configured by the BS, and the BS may determine the precoding matrixes in the horizontal and vertical directions or the composite precoding matrix by using a corresponding processing mode according to a preconfigured feedback after receiving the related information.

In this embodiment, the above indication information may be configured via RRC signaling, but it is not limited to thereto, and the indication information may be configured via other existing information or newly-established signaling.

Similar to Embodiment 2, the first processing unit 702 and the second processing unit 703 are alternative components.

In this embodiment, besides the above components, the BS may further include common technical features to existing BS.

Figure 10 is a schematic diagram of a structure of a BS of Embodiment 4 of the present disclosure. As shown in Figure 10, the BS includes a first receiving unit 1003a, a first processing unit 1003b and a second processing unit 1003c, with their functions being as described in above discription, which shall not be described herein any further. Furthermore, as shown in Figure 10, the BS may further include a main control circuit 1001, a memory 1002, a transceiver 1004, and an antenna 1005. The memory 1002 may store an information feedback program and the main control circuit 1001 may execute the program, the process of executing the program being as described in Embodiment 2, which shall not be described herein any further. The functions of other components are similar to those of the prior art, which shall not be described herein any further. Furthermore, the first receiving unit 1003a, the first processing unit 1003b and the second processing unit 1003c may be integrated with the main control circuit 1001 for use.

It can be known from the above embodiment that the UE feeds back the related information separately in the horizontal and/or vertical directions and the BS determines precoding matrixes in the horizontal and vertical directions after receiving the information fed back by the UE, whereby the size of the a precoding codebook could be reduced.

Embodiment 5

Embodiment 5 of the present disclosure provides a communication system, including: the UE as described in Embodiment 3 and the BS as described in Embodiment 4, with the functions of the UE and the BS being as described in Embodiments 3 and 4, which shall not be described herein any further.

Embodiment 6

Embodiment 6 of the present disclosure provides a codebook determination method. In this embodiment, when antenna configuration as shown in Figure 1 is adopted, a dual-codebook structure is used for both horizontal and vertical directions, for example, $W_{H1}$ and $W_{H2}$ represent a long-term/wideband codeword and an instant/narrow codeword in the horizontal direction respectively, and $W_{V1}$ and $W_{V2}$ represent a long-term/wideband codeword and an instant/narrowband codeword in the vertical direction respectively. For example, a codebook may be determined by a combination of $W_{V1}(W_{V2})$ and $W_{H1}(W_{H2})$.

In this embodiment, determining a long-term/wideband codebook by taking a combination $f(W_{H1}, W_{V1})$ of long-term/wideband codewords in the horizontal and vertical directions or taking long-term/wideband codewords $W_{H1}$ and $W_{V1}$ in the horizontal and vertical directions as a long-term/wideband precoding matrix; determining an instant/narrowband codebook by taking a combination $f(W_{H2}, W_{V2})$ of instant/narrowband codewords in the horizontal and vertical directions as an instant/narrowband precoding matrix; or

determining a long-term/wideband codebook by taking long-term/wideband codewords $W_{H1}$ and $W_{V1}$ in the horizontal and vertical directions as a long-term/wideband precoding matrix, and determining an instant/narrowband codebook by taking a combination $f(W_{H2}, W_{V2})$ of instant/narrowband codewords in the horizontal and vertical directions as an instant/narrowband precoding matrix.

In this embodiment, a symbol "/" in the context may represent "and/or".

In this embodiment, when the UE moves only in a horizontal plane, the sizes of the codebooks of $W_{V1}$ and $W_{V2}$ are relatively small; therefore, a codebook may be determined based on a combination of $W_{V1}(W_{V2})$ and $W_{H1}(W_{H2})$.

The above contents shall be described below by way of examples.

For example, $W_{H1}$, $W_{H2}$, $W_{V1}$ and $W_{V2}$ have forms as follows but not limited thereto; the following forms are only illustrative.

$$\mathbf{W}_{\mathrm{H1}} = \begin{pmatrix} \mathbf{X}_{\mathrm{H1}} & \mathbf{0} \\ \mathbf{0} & \mathbf{X}_{\mathrm{H1}} \end{pmatrix} \quad \mathbf{b}_m = \begin{bmatrix} 1 & e^{j\frac{2\pi m}{Na}} & e^{j\frac{4\pi m}{Na}} & \cdots & e^{j\frac{2(N-1)\pi m}{Na}} \end{bmatrix}^T$$

$$\mathbf{X}_{\mathrm{H1}}(i_1) = \begin{bmatrix} \mathbf{b}_{C_{i_1}} & \mathbf{b}_{C_{i_1}+\Delta_H} & \cdots & \mathbf{b}_{C_{i_1}+(N_{bH}-1)\Delta_H} \end{bmatrix} \quad i_1 \in (0,1,\cdots,N_{H1}-1) \tag{1}$$

In the formula group (1), a represents an over-sampling factor of a Discrete Fourier Transform (DFT) codebook in $W_{H1}$, m represents subscripts of column vectors; $\Delta_H \geq 1$, which represents a difference between subscripts m between neighboring column vectors; $C_{i_1}$ is a value of $m$ of the first column element of $\mathbf{X}_{H1}$ in the $i_1$-th codeword; $N_{bH}$ is the number of beams contained in one wideband codeword in $\mathbf{W}_{H1}$, and $N_{H1}$ is a codebook size of $\mathbf{W}_{H1}$.

In addition, bm is a general formula, be represents a situation where m=C; $W_{H1}$ is a block diagonal matrix, $X_{H1}$ is one sub-block of the block diagonal matrix; N is the number of antennas in the horizontal direction shown in Figures 1 and 2; m is a subscript of $b_m$, generally being an integer greater than or equal to 0; $i_1$ is an integer greater than or equal to 0; and $N_{bh}$ is a positive integer.

$$\mathbf{W}_{\mathrm{V1}} = \begin{pmatrix} \mathbf{X}_{\mathrm{V1}} & \mathbf{0} \\ \mathbf{0} & \mathbf{X}_{\mathrm{V1}} \end{pmatrix} \quad \mathbf{b}_m = \begin{bmatrix} 1 & e^{j\frac{2\pi m}{Mb}} & e^{j\frac{4\pi m}{Mb}} & \cdots & e^{j\frac{2(M-1)\pi m}{Mb}} \end{bmatrix}^T$$

$$\mathbf{X}_{\mathrm{V1}}(i_1) = \begin{bmatrix} \mathbf{b}_{D_{i_1}} & \mathbf{b}_{D_{i_1}+\Delta_V} & \cdots & \mathbf{b}_{D_{i_1}+(N_{bV}-1)\Delta_V} \end{bmatrix} \quad i_1 \in (0,1,\cdots,N_{V1}-1) \tag{2}$$

In the formula group (2), b represents an over-sampling factor of a DFT codebook in Wv1, m represents subscripts of column vectors; $\Delta V \geq 1$, which represents a difference between subscripts m between neighboring column vectors; $D_{i_1}$ is a value of $m$ of the first column element of $\mathbf{X}_{V1}$ in the $i_1$-th codeword; $N_{bV}$ is the number of beams contained in one wideband codeword in $\mathbf{W}_{V1}$, and $N_{V1}$ is a codebook size of $\mathbf{W}_{V1}$.

Similarly, $b_m$ is a general formula, $b_D$ represents a situation where m=D; $W_{V1}$ is a block diagonal matrix, $X_{V1}$

is one sub-block of the block diagonal matrix; M is the number of antennas in the vertical direction shown in Figures 1 and 2; m is a subscript of $b_m$, generally being an integer greater than or equal to 0; $i_1$ is an integer greater than or equal to 0; and $N_{bh}$ is a positive integer.

$$\mathbf{W}_{H2}(i_2) = \begin{pmatrix} \mathbf{A}(i_2) \\ \mathbf{B}(i_2) \end{pmatrix} = \begin{pmatrix} \mathbf{Y}_{H1} & \mathbf{Y}_{H2} & \cdots & \mathbf{Y}_{HN_H} \\ \alpha_{H1}\mathbf{Y}_{H1} & \alpha_{H2}\mathbf{Y}_{H2} & \cdots & \alpha_{HN_H}\mathbf{Y}_{HN_H} \end{pmatrix} \quad i_2 \in (0,1,\cdots,N_{H2}-1)$$

$$\mathbf{Y}_{Hj} \in \left[ e_1, e_2, \cdots, e_{N_{bH}} \right], \alpha_{Hj} \in \left( e^{j0\pi/8}, e^{j1\pi/8}, \cdots, e^{j7\pi/8} \right) \tag{3}$$

where, $e_k$ is k-th column of $N_{bH}$-order unit matrix, the number of columns of $\mathbf{W}_{H2}$ is $N_H$, and $N_{H2}$ is the codebook size of $\mathbf{W}_{H2}$.

$$\mathbf{W}_{V2}(i_2) = \begin{pmatrix} \mathbf{C}(i_2) \\ \mathbf{D}(i_2) \end{pmatrix} = \begin{pmatrix} \mathbf{Y}_{V1} & \mathbf{Y}_{V2} & \cdots & \mathbf{Y}_{VN_V} \\ \alpha_{V1}\mathbf{Y}_{V1} & \alpha_{V2}\mathbf{Y}_{V2} & \cdots & \alpha_{VN_V}\mathbf{Y}_{VN_V} \end{pmatrix} \quad i_2 \in (0,1,\cdots,N_{V2}-1)$$

$$\mathbf{Y}_{Vj} \in \left[ e_1, e_2, \cdots, e_{N_{bV}} \right], \alpha_{Vj} \in \left( e^{j0\pi/8}, e^{j1\pi/8}, \cdots, e^{j7\pi/8} \right) \tag{4}$$

where, $e_k$ is k-th column of $N_{bV}$-order unit matrix, the number of columns of $\mathbf{W}_{V2}$ is $N_V$, and $N_{V2}$ is the codebook size of $\mathbf{W}_{V2}$.

In this embodiment, the three specific examples will be described hereinafter.

Example 1, determining a codebook by taking $f(W_{H1}, W_{V1})$ as a wideband precoding matrix, and determining codebooks respectively by taking $W_{H2}$ and $W_{V2}$ as narrowband precoding matrixes. That is, there exist three codebooks as follows in the system:

A first codebook (represented as $I_1$), a long-term/wideband codebook: W1=$f(W_{H1}, W_{V1})$;

where, f(.) is a composite function, including matrix convolution, matrix Kronecker product, Hadamard product and other matrix operations etc.

For example, performing a Kronecker product operation on sub-matrix $X_{H1}$ and $X_{V1}$ in $W_{H1}$ and $W_{V1}$ respectively to constitute a new precoding codebook, and when antenna ports in the same polarization antenna group are numbered in an order of the vertical direction first and then the horizontal direction , the wideband codebook may be represented as:

$$\mathbf{W}_1 = \begin{pmatrix} \mathbf{X}_{H1} \otimes \mathbf{X}_{V1} & \mathbf{0} \\ \mathbf{0} & \mathbf{X}_{H1} \otimes \mathbf{X}_{V1} \end{pmatrix} \tag{5}$$

where, $\otimes$ represents Kronecker product of the matrix, and when antenna ports in the same polarization antenna group are numbered in an order of the horizontal direction first and then the vertical direction,

$$\mathbf{W}_1 = \begin{pmatrix} \mathbf{X}_{V1} \otimes \mathbf{X}_{H1} & \mathbf{0} \\ \mathbf{0} & \mathbf{X}_{V1} \otimes \mathbf{X}_{H1} \end{pmatrix} \tag{6}$$

In this case, the size of the long-term/wideband $W_1$ is $N_{H1}N_{V1}$, and the number of beams contained in each wideband codeword is $N_{bH}N_{bV}$. When a codebook is designed, the value of $N_{H1},N_{V1},N_{bH},N_{bV}$ may be appropriately selected, or beams contained in each W1 is down-selected after the codeword is formed, that is, the number $N_b$ of beams may be less than $N_{bH}N_{bV}$, so as to get a compromise between system performance and feedback overhead.

A second codebook (represented as $I_2$), an instant/narrowband codebook in the horizontal direction: formula (3), that is,

$$\mathbf{W}_{H2}\left(i_2\right)=\begin{pmatrix} \mathbf{Y}_{H1} & \mathbf{Y}_{H2} & \cdots & \mathbf{Y}_{HN_H} \\ \alpha_{H1}\mathbf{Y}_{H1} & \alpha_{H2}\mathbf{Y}_{H2} & \cdots & \alpha_{HN_H}\mathbf{Y}_{HN_H} \end{pmatrix} \quad i_2 \in \left(0,1,\cdots,N_{H2}\text{-}1\right)$$

$$\mathbf{Y}_{Hj} \in \left[e_1,e_2,\cdots,e_{N_{bH}}\right], \alpha_{Hj} \in \left(e^{j0\pi/8},e^{j1\pi/8},\cdots,e^{j7\pi/8}\right)$$

A third codebook (represented as $I_3$), an instant/narrowband codebook in the vertical direction: formula (4), that is,

$$\mathbf{W}_{V2}\left(i_2\right)=\begin{pmatrix} \mathbf{Y}_{V1} & \mathbf{Y}_{V2} & \cdots & \mathbf{Y}_{VN_V} \\ \alpha_{V1}\mathbf{Y}_{V1} & \alpha_{V2}\mathbf{Y}_{V2} & \cdots & \alpha_{VN_V}\mathbf{Y}_{VN_V} \end{pmatrix} \quad i_2 \in \left(0,1,\cdots,N_{V2}\text{-}1\right)$$

$$\mathbf{Y}_{Vj} \in \left[e_1,e_2,\cdots,e_{N_{bV}}\right], \alpha_{Vj} \in \left(e^{j0\pi/8},e^{j1\pi/8},\cdots,e^{j7\pi/8}\right)$$

And the relationship between the number of rows of $\mathbf{Y}_{H1}$ and $\mathbf{Y}_{V1}$ in instant/narrowband codewords in the horizontal and vertical directions, i.e., $N_{bH}$ and $N_{bV}$ and the parameter $N_b$ in the long-term/wideband codebook is $N_b=N_{bH}\text{-}Nb_V$.

In this embodiment, the first codebook $I_1$, the second codebook $I_2$, and the third codebook $I_3$ are determined on the basis of the above combined mechanism.

After the above codebooks are determined, the above codebooks may both be stored in the UE side and the BS side. When the UE feeds back the related information and the feedback mode configured by the BS side for the UE is an aperiodic feedback mode, the UE reports to the BS the serial numbers of determined $W_1$, $W_{H2}$ and $W_{H3}$ in $I_1$, $I_2$ and $I_3$ according to the feedback type by using a time-frequency resource determined in the feedback mode description. When the feedback mode configured by the BS side for the UE is a periodic feedback mode, the UE reports to the BS the serial numbers of determined $W_1$, $W_{H2}$ and $W_{H3}$ in $I_1$, $I_2$ and $I_3$ according to the feedback type separately or in combination with other CSI feedback content (such as RI, CQI etc.) by using a time-frequency resource determined in the feedback mode description. In this embodiment, the manner of combination feedback may be described in the following Embodiment 10, which shall not be described herein any further.

Example 2, designing codebooks respectively by taking $W_{H1}$ and $W_{V1}$ as long-term/wideband precoding matrixes, and designing a codebook by taking $f(W_{H2}, W_{V2})$ as an instant/narrowband precoding matrix. That is, there exist three codebooks as follows in the system:

a first codebook (represented as $I_1$), a long-term/wideband codebook in the horizontal direction: formula (1), that is,

$$\mathbf{W}_{H1}=\begin{pmatrix} \mathbf{X}_{H1} & \mathbf{0} \\ \mathbf{0} & \mathbf{X}_{H1} \end{pmatrix} \quad \mathbf{b}_m=\left[1 \quad e^{j\frac{2\pi m}{Na}} \quad e^{j\frac{4\pi m}{Na}} \quad \cdots \quad e^{j\frac{2(N\text{-}1)\pi m}{Na}}\right]^T$$

$$\mathbf{X}_{H1}\left(i_1\right)=\left[\mathbf{b}_{C_{i_1}} \quad \mathbf{b}_{C_{i_1}+\Delta_H} \quad \cdots \quad \mathbf{b}_{C_{i_1}+(N_{bH}\text{-}1)\Delta_H}\right] \quad i_1 \in \left(0,1,\cdots,N_{H1}\text{-}1\right)$$

a second codebook (represented as $I_2$), a long-term/wideband codebook in the vertical direction: formula (2), that is,

$$\mathbf{W}_{V1}=\begin{pmatrix} \mathbf{X}_{V1} & \mathbf{0} \\ \mathbf{0} & \mathbf{X}_{V1} \end{pmatrix} \quad \mathbf{b}_m=\left[1 \quad e^{j\frac{2\pi m}{Mb}} \quad e^{j\frac{4\pi m}{Mb}} \quad \cdots \quad e^{j\frac{2(M\text{-}1)\pi m}{Mb}}\right]^T$$

$$\mathbf{X}_{V1}(i_1) = \begin{bmatrix} \mathbf{b}_{D_{i_1}} & \mathbf{b}_{D_{i_1}+\Delta_V} & \cdots & \mathbf{b}_{D_{i_1}+(N_{bV}-1)\Delta_V} \end{bmatrix} \quad i_1 \in (0,1,\cdots,N_{V1}-1)$$

a third codebook (represented as $I_3$), an instant/narrowband codebook: $W_1 = f(W_{H2}, W_{V2})$, where, f(.) is a composite function, including matrix convolution, matrix Kronecker product, Hadamard product and other matrix operations etc.

For example, performing a Kronecker product operation on sub-matrixes in $W_{H2}$ and $W_{V2}$ respectively to constitute a new precoding codebook, and when antenna ports in the same polarization antenna group are numbered in an order of the vertical direction first and then the horizontal direction, the wideband codebook may be represented as:

$$\mathbf{W}_2 = \begin{pmatrix} \mathbf{A} \otimes \mathbf{C} \\ \mathbf{B} \otimes \mathbf{D} \end{pmatrix} \qquad (7)$$

and when antenna ports in the same polarization antenna group are numbered in an order of the horizontal direction first and then the vertical direction,

$$\mathbf{W}_2 = \begin{pmatrix} \mathbf{C} \otimes \mathbf{A} \\ \mathbf{D} \otimes \mathbf{B} \end{pmatrix} \qquad (8)$$

In this case, the size of $W_2$ is $N_{H2}N_{V2}$, and the values of $N_{H2}$ and $N_{V2}$ may be appropriately selected, or the codewords of $W_2$ is donw-selected after the codeword is formed, that is, the codebook size $N_2$ of $W_2$ may be less than $N_{H2}N_{V2}$, so as to get a compromise between system performance and feedback overhead.

In this embodiment, the first codebook $I_1$, the second codebook $I_2$, and the third codebook $I_3$ are determined on the basis of the above combined mechanism.

When the UE feeds back the related information and the feedback mode configured by the BS side for the UE is an aperiodic feedback mode, the UE reports to the BS the serial numbers of determined $W_{H1}$, $W_{H2}$ and $W_2$ in $I_1$, $I_2$ and $I_3$ according to the feedback type by using a time-frequency resource determined in the feedback mode description. When the feedback mode configured by the BS side for the UE is a periodic feedback mode, the UE reports to the BS the serial numbers of determined $W_{H1}$, $W_{H2}$ and $W_2$ in $I_1$, $I_2$ and $I_3$ according to the feedback type separately or in combination with other CSI feedback content (such as RI, CQI etc.) by using a time-frequency resource determined in the feedback mode description. In this embodiment, the manner of combination feedback may be described in the following Embodiment 10, which shall not be described herein any further.

Example 3, designing a codebook by taking $f(W_{H1}, W_{V1})$ as a wideband precoding matrix, and designing a codebook by taking $f(W_{H2}, W_{V2})$ as a narrowband precoding matrix. That is, there exist two codebooks as follows in the system:

a long-term/wideband codebook: formula (5) or (6) which is described as in hereinbefore and not described herein any further; and

an instant/narrowband codebook: formula (7) or (8) which is described as in hereinbefore and not described herein any further.

The first codebook and the second codebook determined as the above are represented as $I_1$ and $I_2$ respectively; when the feedback mode configured by the BS side for the UE is an aperiodic feedback mode, the UE reports to the BS the serial numbers of determined $f(W_{H1}, W_{V1})$ and $f(W_{H1}, W_{V1})$ in $I_1$ and $I_2$ according to the feedback type by using a time-frequency resource determined in the feedback mode description. When the feedback mode configured by the BS side for the UE is a periodic feedback, the UE reports to the BS the serial numbers of determined $f(W_{H1}, W_{V1})$ and $f(W_{H2}, W_{V2})$ in $I_1$ and $I_2$ according to the feedback type separately or in combination with other CSI feedback content (such as RI, CQI etc.) by using a time-frequency resource determined in the feedback mode description. In this embodiment, the manner of combination feedback may be described in the following Embodiment 10, which is not described herein any further.

In this embodiment, the BS may configure any one of above three precoding matrix combination manners and informs the configuration of the UE; for example, the above indication information may be configured via RRC signaling, or may be configured via other existing information or new-established signaling, which is not described herein any further.

It can be known from the above embodiment that a codebook may be determined on the basis of the combination manner of precoding matrixes, and that feedback of the related information may be performed on the basis of the determined codebook.

Embodiment 7

Embodiment 7 of the present disclosure provides a codebook determination apparatus, including: a first codebook determination unit configured to determine a long-term/wideband codebook by taking a combination of long-term/wideband codewords in horizontal and vertical directions, or taking long-term/wideband codewords in horizontal and vertical directions, as a long-term/wideband precoding matrix; and to determine an instant/narrowband codebook by taking a combination of instant/narrowband codewords in the horizontal and vertical directions as an instant/narrowband precoding matrix; or

to determine a long-term/wideband codebook by taking long-term/wideband codewords and in horizontal and vertical directions as a long-term/wideband precoding matrix, and to determine an instant and/or narrowband codebook by taking a combination of instant/narrowband codewords in the horizontal and vertical directions as an instant/narrowband precoding matrix.

In this embodiment, the process of determining a codebook is as described in Embodiment 6, which is not described herein any further.

Embodiment 8

Embodiment 8 of the present disclosure provides a codebook determination method. In this embodiment, a dual-codebook structure is used for a horizontal direction of an antenna array and a single-codebook structure is used in a vertical direction thereof; for example, $W_{H1}$ and $W_{H2}$ represent a long-term/wideband codeword and an instant/narrowband codeword in the horizontal direction respectively.

In this embodiment, determining a long-term/wideband codebook by taking a combination $f(W_{H1}, W_V)$ of a long-term/wideband codeword in the horizontal direction and a precoding codeword in the vertical direction or taking the long-term/wideband codeword $W_{H1}$ in the horizontal direction as a wideband precoding matrix; and determining an instant/narrowband codebook by taking a combination $f(W_{H2}, W_V)$ of an instant/narrowband codeword $W_{H2}$ in the horizontal direction and a precoding codeword Wv in the vertical direction as an instant/narrowband precoding matrix; or

determining a long-term/wideband codebook by taking a long-term/wideband codeword $W_{H1}$ in the horizontal direction as a long-term/wideband precoding matrix, and determining an instant/narrowband codebook by taking a combination $f(W_{H2}, Wv)$ of an instant/narrowband codeword $W_{H2}$ in the horizontal direction and a precoding codeword Wv in the vertical direction as an instant/narrowband precoding matrix.

In this embodiment, when the UE moves only in a horizontal plane, the size of the codebook of Wv is relatively small; therefore, a codebook may be determined based on a combination of Wv and $W_{H1}(W_{H2})$.

The above contents shall be described below by way of examples.

For example, $W_{H1}$ and $W_{H2}$ have forms of formulae (1) and (2), and when the antenna configuration shown in Figure 1 is adopted, the form of Wv is:

$$\mathbf{W}_V\left(i_2\right)=\begin{pmatrix}\mathbf{E}\left(i_2\right)\\\mathbf{F}\left(i_2\right)\end{pmatrix}=\begin{pmatrix}\mathbf{Z}_{V1}&\mathbf{Z}_{V2}&\cdots&\mathbf{Z}_{VN_V}\\\alpha_{V1}\mathbf{Z}_{V1}&\alpha_{V2}\mathbf{Z}_{V2}&\cdots&\alpha_{VN_V}\mathbf{Z}_{VN_V}\end{pmatrix}\quad i_2\in\left(0,1,\cdots,N_3\text{-}1\right)$$

$$\alpha_{Vj}\in\left(e^{j0\pi/8},e^{j1\pi/8},\cdots,e^{j7\pi/8}\right) \tag{9}$$

where, $Z_{Vj}$ is M-order DFT vector, and $N_3$ is the codebook size of $W_V$.

When the antenna configuration shown in Figure 2 is adopted, the form of Wv is:

$$\mathbf{W}_V\left(i_2\right)=\begin{pmatrix}\mathbf{Z}_{V1}&\mathbf{Z}_{V2}&\cdots&\mathbf{Z}_{VN_V}\end{pmatrix}\quad i_2\in\left(0,1,\cdots,N_3\text{-}1\right) \tag{10}$$

where, $Z_{Vj}$ is M-order DFT vector, and $N_3$ is the codebook size of $W_V$.

In this embodiment, the three specific examples will be described hereinafter.

Example 1, designing a codebook by taking $f(W_{H1}, Wv)$ as a long-term/wideband precoding matrix, and designing a codebook by taking $W_{H2}$ as an instant/narrowband precoding matrix, and feeding back them. That is, there exist two codebooks as follows in the system:

A first codebook, a long-term/wideband codebook:

A first codebook, a long-term/wideband codebook: $W_1 = f(W_{H1}, W_V)$

where, f(.) is a composite function, including matrix convolution, matrix Kronecker product, Hadamard product and other matrix operations etc.

For example, performing respectively Kronecker product operations on a sub-matrix $X_{H1}$ of $W_{H1}$ and sub-matrixes E and F of Wv to constitute a new precoding codebook, and when antenna ports in the same polarization antenna group are numbered in an order of the vertical direction first and then the horizontal direction, the wideband codebook may be represented as:

$$\mathbf{W}_1 = \begin{pmatrix} \mathbf{X}_{H1} \otimes \mathbf{E} & \mathbf{0} \\ \mathbf{0} & \mathbf{X}_{H1} \otimes \mathbf{F} \end{pmatrix} \qquad (11)$$

and when antenna ports in the same polarization antenna group are numbered in an order of the horizontal direction first and then the vertical direction,

$$\mathbf{W}_1 = \begin{pmatrix} \mathbf{E} \otimes \mathbf{X}_{H1} & \mathbf{0} \\ \mathbf{0} & \mathbf{F} \otimes \mathbf{X}_{H1} \end{pmatrix} \qquad (12)$$

In this embodiment, the size of $W_1$ is $N_{H1}N_3$, and the number of beams contained in each wideband codeword is $N_{bH}N_V$. When a codebook is designed, the value of $N_{H1}, N_3, N_{bH}$ may be appropriately selected, so as to get a compromise between system performance and feedback overhead.

A second codebook, an instant/narrowband codebook:

$$\mathbf{W}_2(i_2) = \begin{pmatrix} \mathbf{Y}_{H1} & \mathbf{Y}_{H2} & \cdots & \mathbf{Y}_{HN_H} \\ \alpha_{H1}\mathbf{Y}_{H1} & \alpha_{H2}\mathbf{Y}_{H2} & \cdots & \alpha_{HN_H}\mathbf{Y}_{HN_H} \end{pmatrix} \quad i_2 \in (0,1,\cdots,N_{H2}\text{-}1)$$

$$\mathbf{Y}_{Hj} \in \left[ e_1, e_2, \cdots, e_{N_{bH}N_V} \right], \alpha_{Hj} \in \left( e^{j0\pi/8}, e^{j1\pi/8}, \cdots, e^{j7\pi/8} \right)$$

As compared to formula (3), the number of rows of $\mathbf{Y}_{Hj}$ should be $N_{bH}N_V$.

The first codebook and the second codebook determined as the above are represented as $I_1$ and $I_2$ respectively; when the feedback mode configured by the BS side for the UE is an aperiodic feedback mode, the UE reports to the BS the serial numbers of determined $W_1$ and $W_2$ in $I_1$ and $I_2$ according to the feedback type by using a time-frequency resource determined in the feedback mode description. When the feedback mode configured by the BS side for the UE is a periodic feedback mode, the UE reports to the BS the serial numbers of determined $W_1$ and $W_2$ in $I_1$ and $I_2$ according to the feedback type separately or in combination with other CSI feedback content (such as RI, CQI etc.) by using a time-frequency resource determined in the feedback mode description. In this embodiment, the manner of combination feedback may be described in the following Embodiment 10, which is not described herein any further.

Example 2, designing a codebook by taking $W_{H1}$ as a long-term/wideband precoding matrix, and designing a codebook by taking $f(W_{H2}, W_V)$ as an instant/narrowband precoding matrix, and feeding back them. That is, there exist two codebooks as follows in the system:

A first codebook, a long-term/wideband code: formula (1);

A second codebook, an instant/narrowband codebook:

A second codebook, an instant/narrowband codebook: $W_2 = f(W_{H2}, W_V)$.

where, f(.) is a composite function, including matrix convolution, matrix Kronecker product, Hadamard product and other matrix operations etc.

For example, performing respectively Kronecker product operations on a sub-matrix of $W_{H2}$ and sub-matrixes E and F of Wv to constitute a new precoding codebook, and when antenna ports in the same polarization antenna group are numbered in an order of the vertical direction first and then the horizontal direction, the instant/narrowband codebook may be represented as:

$$\mathbf{W}_2 = \begin{pmatrix} \mathbf{A} \otimes \mathbf{E} \\ \mathbf{B} \otimes \mathbf{F} \end{pmatrix} \qquad (13)$$

and when antenna ports in the same polarization antenna group are numbered in an order of the horizontal direction first and then the vertical direction,

$$\mathbf{W}_2 = \begin{pmatrix} \mathbf{E} \otimes \mathbf{A} \\ \mathbf{F} \otimes \mathbf{B} \end{pmatrix} \qquad (14)$$

In this embodiment, the size of $W_2$ is $N_{H2}N_3$, and when designing a codebook, the value of $N_{H2}, N_3$ may be appropriately selected, so as to get a compromise between system performance and feedback overhead.

The first codebook and the second codebook determined as the above are represented as $I_1$ and $I_2$ respectively; when the feedback mode configured by the BS side for the UE is an aperiodic feedback mode, the UE reports to the BS the serial numbers of determined $W_1$ and $W_2$ in $I_1$ and $I_2$ according to the feedback type by using a time-frequency resource determined in the feedback mode description. When the feedback mode configured by the BS side for the UE is a periodic feedback mode, the UE reports to the BS the serial numbers of determined $W_1$ and $W_2$ in $I_1$ and $I_2$ according to the feedback type separately or in combination with other CSI feedback content (such as RI, CQI etc.) by using a time-frequency resource determined in the feedback mode description. In this embodiment, the manner of combination feedback may be described in the following Embodiment 10, which is not described herein any further.

Example 3, designing a codebook by taking $f(W_{H1}, W_V)$ as a long-term/wideband precoding matrix, and designing a codebook by taking $f(W_{H2}, Wv)$ as an instant/narrowband precoding matrix, and feeding back them. That is, there exist two codebooks as follows in the system:

a long-term/wideband codebook: formula (11) or (12) which is as described in hereinbefore and not described herein any further; and
an instant/narrowband codebook: formula (13) or (14) which is as described in hereinbefore and not described herein any further.

The first codebook and the second codebook determined as the above are represented as $I_1$ and $I_2$ respectively; when the feedback mode configured by the BS side for the UE is an aperiodic feedback mode, the UE reports to the BS the serial numbers of determined $f(W_{H1}, Wv)$ and $f(W_{H2}, Wv)$ in $I_1$ and $I_2$ according to the feedback type by using a time-frequency resource determined in the feedback mode description. When the feedback mode configured by the BS side for the UE is a periodic feedback mode, the UE reports to the BS the serial numbers of determined $f(W_{H1}, Wv)$ and $f(W_{H2}, Wv)$ in $I_1$ and $I_2$ according to the feedback type separately or in combination with other CSI feedback content (such as RI, CQI etc.) by using a time-frequency resource determined in the feedback mode description. In this embodiment, the manner of combination feedback may be described in the following Embodiment 10, which is not described herein any further.

Similar to Embodiment 6, the BS may configure any one of above three precoding matrix combination manners and informs the configuration of the UE; for example, the configuration information may be configured via RRC signaling, and may also be configured via other existing information or new-established signaling.

In addition, when the information is fed back, a corresponding rank indication and a precoding matrix indication may be fed back, and the specific method for feedback may adopt the method described in the following Embodiment 10 hereinafter, which is not described herein any further. But the feedback method is not limited to the method described in Embodiment, and the any existing feedback method may also be adopted.

Embodiment 9

Embodiment 9 of the present disclosure provides a codebook determination apparatus. The apparatus includes a second codebook determination unit configured to determine a long-term/wideband codebook by taking a combination of long-term/wideband codewords in a horizontal direction and precoding codewords in a vertical direction, or taking the long-term/wideband codewords in a horizontal direction, as a long-term/wideband precoding matrix; and to determine an instant/narrowband codebook by taking a combination of instant/narrowband codewords in the horizontal direction and the precoding codewords in the vertical direction as an instant/narrowband precoding matrix; or
to determine a long-term/wideband codebook by taking a long-term/wideband codeword in a horizontal direction as a long-term/wideband precoding matrix, and to determine an instant/narrowband codebook by taking a combination of an instant/narrowband codewords in the horizontal direction and precoding codewords in a vertical direction as an instant/narrowband precoding matrix.

The specific determination method is as described in Embodiment 8, which is not described herein any further.

In the above Embodiments 6-9, f(.) represents a specific function, such as matrix convolution, matrix Kronecker product, or Hadamard product etc., which is described as Embodiment 2, which is not described herein any further.

In addition, in the above Embodiments, the adopted combination manner may be configured by the BS side, and may be configured via RRC signaling, and may also be configured via other existing information or new-established signaling.

The codebook determination apparatus in the above Embodiments 7 and 9 may be configured at the UE side or the BS side. When the apparatus is configured at the UE side, the UE not only includes the above components, but also include other common components to existing UE, and which is similar to Embodiment 3 and not described herein any further; When the apparatus is configured at the BS side, the BS not only includes the above components, but also include other common components to existing BS, and which is similar to Embodiment 4 and not described herein any further.

Embodiment 10

Embodiment 10 of the present disclosure provides UE. The UE includes an information feedback unit configured to feed back to a BS serial numbers of determined long-term/wideband codebook and instant/narrowband codebook in predetermined codebooks according to a feedback type by using a time-frequency resource determined in a feedback mode description, when the UE performs an aperiodic feedback; and to feed back to the BS the serial numbers of the determined long-term/wideband codebook and instant/narrowband codebook in the predetermined codebooks according to the feedback type separately or in combination with other feedback content by using the time-frequency resource determined in the feedback mode description, when the UE performs a periodic feedback.

The predetermined codebooks being determined according to the method as described in Embodiment 6 or 8.

In this embodiment, the UE not only includes the above information feedback unit, but also include other common components to existing UE, and which is similar to Embodiment 3 and not described herein any further.

Embodiment 11

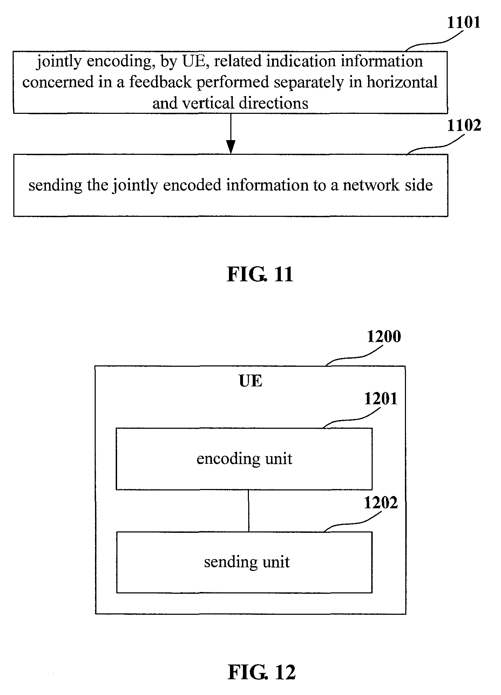

Figure 11 is a flowchart of an information feedback method of Embodiment 11 of the present disclosure. As shown in Figure 11, the method includes:

Step 1101, jointly encoding, by UE, related indication information concerned in a feedback performed separately in horizontal and vertical directions ; and
Step1102, sending the jointly encoded information to a network side.

In this embodiment, the related indication information includes one or more pieces of the following information involved in the above Embodiments 1-10:a rank indication, a precoding indication, and a precoding type indication (PTI). The above information shall be described below by way of examples.

The above related indication information may include:

a total number of data streams (RI), a rank indication ($N_H$) in a horizontal direction, a rank indication (Nv) in a vertical direction, a precoding matrix indication ($I_H$) in a horizontal direction, a precoding matrix indication (Iv) in a vertical direction and a precoding type indication (PTI); or

when a dual-codebook structure is used, the related indication information comprises one or more of one or more pieces of the following information:

a total number of data streams (RI), a rank indication ($N_H$) in a horizontal direction, a rank indication (Nv) in a vertical direction, a precoding type indication (PTI), a long-term/wideband precoding matrix indication ($I_{H1}$) in a horizontal direction, an instant/narrowband precoding matrix indication ($I_{H1}$) in a horizontal direction, a long-term/wideband precoding matrix indication ($I_{H2}$) in a vertical direction, an instant/narrowband precoding matrix indication ($I_{V1}$) in a vertical direction, a precoding matrix indication $I(W_{H1}, W_{V1})$ taking a combination $f(W_{H1}, W_{V1})$ of long-term/wideband codewords in horizontal and vertical directions as a long-term/wideband precoding matrix, a precoding matrix indication $I(W_{H2}, W_{V2})$ taking a combination $f(W_{H2}, W_{V2})$ of instant/narrowband codewords in horizontal and vertical directions as an instant/narrowband precoding matrix, a precoding matrix indication $I(W_{H1}, Wv)$ taking a combination $f(W_{H1}, W_V)$ of long-term/wideband codewords in a horizontal direction and precoding codewords in a vertical direction as a long-term/wideband precoding matrix, and a precoding matrix indication $I(W_{H2}, Wv)$ taking a combination $f(W_{H2}, Wv)$ of instant/narrowband codewords in a horizontal direction and precoding codewords in a vertical direction as an instant/narrowband precoding matrix.

In this embodiment, the above jointly encoded information may be sent to a network side via a physical uplink control channel (PUCCH). The above information may be referred to as channel state information (CSI).

Table 1 shows CSI reporting content that may be added newly, that is, when reporting CSI, the UE not only may report the original content, but also report the content shown in the table 1. Table 1 is only illustrative, and the content in Table 1 may not be limited to thereto and could be any combination of the above rank indication and precoding matrix indication etc., and could also be compatible with existing sub-band CQI information.

Table 1

| Reporting Type | Reported Content |
| --- | --- |
| 1b | sub-band $CQI/I_H/I_V$ |
| 1c | sub-band $CQI/I_H$ |
| 1d | sub-band $CQI/I_V$ |
| 1e | sub-band $CQI/I_{H2}/IV_2$ |
| 1f | sub-band $CQI/I_{H2}$ |
| 1g | sub-band $CQI/I_{V2}$ |
| 1h | sub-band $CQI/I(W_{H2}, W_{V2})$ |
| 1i | sub-band $CQI/I(W_{H2}, W_{V2})$ |
| 2d | wideband $CQI//I_H/I_V$ |
| 2e | wideband $CQI//I_H$ |
| 2f | wideband $CQI//I_V$ |
| 3a | $RI/N_{H/}N_V$ |
| 3b | $RI/N_H$ |
| 3c | $RI/N_V$ |
| 3d | $NH/N_V$ |
| 5a | $N_H/I_{H1}$ |
| 5b | $N_V/I_{V1}$ |
| 5c | $N_H/I_{H1}/N_V/I_{V1}$ |

Table 2 is existing PUCCH reporting type and PUCCH reporting mode in LTE version 9 (PUCCH Reporting Type Payload size per PUCCH Reporting Mode and Mode State)

Table 2

| PUCCH Reporting Type | Reported Content | Mode State | PUCCH Reporting Mode | | | |
|---|---|---|---|---|---|---|
| | | | mode 1-1 (bits/BP) | mode 2-1 (bits/BP) | mode 1-0 (bits/BP) | mode 2-0 (bits/BP) |
| 1 | sub-band CQI | RI = 1 | NA | 4+L | NA | 4+L |
| | | RI > 1 | NA | 7+L | NA | 4+L |
| 1a | sub-band CQI/the second PMI | 8 antenna ports RI = 1 | NA | 8+L | NA | NA |
| | | 8 antenna ports 1 < RI < 5 | NA | 9+L | NA | NA |
| | | 8 antenna ports RI > 4 | NA | 7+L | NA | NA |
| 2 | wideband CQI/PMI | 2 antenna ports RI = 1 | 6 | 6 | NA | NA |
| | | 4 antenna ports RI = 1 | 8 | 8 | NA | NA |
| | | 2 antenna ports RI > 1 | 8 | 8 | NA | NA |
| | | 4 antenna ports RI > 1 | 11 | 11 | NA | NA |
| 2a | wideband the first PMI | 8 antenna ports RI < 3 | NA | 4 | NA | NA |
| | | 8 antenna ports 2 < RI < 8 | NA | 2 | NA | NA |
| | | 8 antenna ports RI = 8 | NA | 0 | NA | NA |
| 2b | wideband CQI/the second PMI | 8 antenna ports RI = 1 | 8 | 8 | NA | NA |
| | | 8 antenna ports 1 < RI < 4 | 11 | 11 | NA | NA |
| | | 8 antenna ports RI = 4 | 10 | 10 | NA | NA |
| | | 8 antenna ports RI > 4 | 7 | 7 | NA | NA |
| 2c | wideband CQI /the first PMI /the second PMI | 8 antenna ports RI = 1 | 8 | NA | NA | NA |
| | | 8 antenna ports 1 < RI ≤ 4 | | NA | NA | NA |
| | | 8 antenna ports 4 < RI ≤ 7 | 9 | NA | NA | NA |
| | | 8 antenna ports RI = 8 | 7 | NA | NA | NA |

(continued)

| PUCCH Reporting Type | Reported Content | Mode State | PUCCH Reporting Mode | | | |
| --- | --- | --- | --- | --- | --- | --- |
| | | | mode 1-1 (bits/BP) | mode 2-1 (bits/BP) | mode 1-0 (bits/BP) | mode 2-0 (bits/BP) |
| 3 | RI | 2/4 antenna ports, 2 layer of spatial multiplexing | 1 | 1 | 1 | 1 |
| | | 8 antenna ports, 2 layers of spatial multiplexing | 1 | NA | NA | NA |
| | | 4 antenna ports, 4 layers of spatial multiplexing | 2 | 2 | 2 | 2 |
| | | 8 antenna ports, 4 layers of spatial multiplexing | 2 | NA | NA | NA |
| | | 8 layers of spatial multiplexing | 3 | NA | NA | |
| 4 | wideband CQI | RI = 1 or RI>1 | NA | NA | 4 | 4 |
| 5 | RI/the first PMI | 8 antenna ports, 2 layers of spatial multiplexing | 4 | NA | NA | NA |
| | | 8 antenna ports, 4 and 8 layers of spatial multiplexing | 5 | | | |
| 6 | RI/P TI | 8 antenna ports, 2 layers of spatial multiplexing | NA | 2 | NA | NA |
| | | 8 antenna ports, 4 layers of spatial multiplexing | NA | 3 | NA | NA |
| | | 8 antenna ports, 8 layers of spatial multiplexing | NA | 4 | NA | NA |

Embodiment 12

Figure 12 is a schematic diagram of a structure of UE of Embodiment 12 of the present disclosure. As shown in Figure 12, UE 1200 includes an encoding unit 1201 and sending unit 1202; wherein,
the encoding unit 1201 is configured to jointly encode related indication information concerned in a feedback performed separately in horizontal and vertical directions ; and the sending unit 1201 is configured to send jointly encoded information to a network side.

In this embodiment, the related indication information is described in Embodiment 10, which is not described herein any further.

In addition, in addition to the above components, the UE may further include other components, which is similar to Figure 6 in Embodiment 3 and not described herein any further.

Embodiment 13

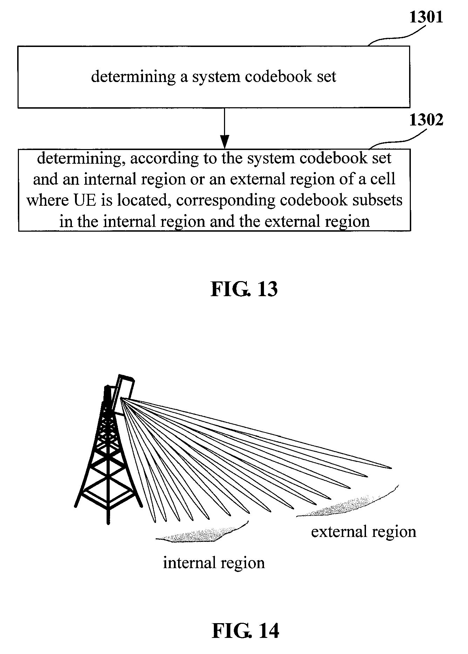

Figure 13 is a flowchart of a codebook determination method of Embodiment 13 of the present disclosure. As shown in Figure 13, the method includes:

Step 1301, determining a system codebook set.

In this embodiment, a system codebook set may be constructed in accordance with certain criteria, for example, a codebook based on Discrete Fourier Transform (DFT), a codebook based on grid of beam (GoB), 2 antennas, 4 antennas and 8 antennas codebooks in LTE version 12 and the previous versions and so on, which is not described herein any further.

Step 1302, determining, according to the system codebook set and an internal region or an external region of a cell where UE is located, corresponding codebook subsets in the internal region and the external region.

In this embodiment, Figure 14 is a schematic diagram of division of an internal region and an external region of a BS. In a general case, a position where UE is located may be divided into an internal region and an external region according to the different coverage area of a BS, wherein, a region near the BS is the internal region and a region away from the BS is the external region; since a distance between the internal region and the BS is different from a distance between the external region and the BS, elevation dimensional extended circumstances are different, and different codebook subset restrictions may be configured for codebooks in the vertical direction.

In this embodiment, the codebook subsets of the external region and the internal region are overlapped or not overlapped with each other, and are subsets of the system codebook set. The examples will be described as follows: For example, when a dual-codebook structure as formulae (2) and (4) for a vertical direction is used, for a long-term/wideband codebook $W_{V1}$, a codebook subset serial numbers which may be configured for the internal and external regions are shown in Table 2:

Table 3 wideband codebook subset restriction table of internal and external regions in a vertical direction

| subset serial numbers of internal region | subset serial numbers of external region |
| --- | --- |
| $0:1:(N_{V1}/2-1)$ | $N_{V1}/2:1:(N_{V1}-1)$ |
| $N_{V1}/2:1:(N_{V1}-1)$ | $0:1:(N_{V1}/2-1)$ |
| $0:2:(N_{V1}-1)$ | $1:2:(N_{V1}-1)$ |
| $1:2:(N_{V1}-1)$ | $0:2:(N_{V1}-1)$ |
| $0:1:(N_{V1}-1)$ | $0:2:(N_{V1}-1)$ |
| $0:1:(N_{V1}-1)$ | $1:2:(N_{V1}-1)$ |

In this way, UE located at different regions may only search for the configured codebook subset without searching for the whole codebook, thereby reducing the complexity of UE end and saving signaling overhead. The above method may also be suitable for a situation where a dual-codebook structure for a vertical direction is used, for example, different codebook subsets are configured for wideband codebooks $W_1$ of the internal and external regions.

In this embodiment, from the perspective of the beam, the external region may be provided with sparse wave beams, which is used for reducing feedback load of UE located at a cell edge, and may be realized by downsampling of codebook. As compared to Table 3, an interval of the codebook serial numbers of the external region may be a natural number greater than 2.

Furthermore, the external region may also be provided with wider or narrower wave beams than the internal region, which may be realized by configuring different numbers of antenna ports for the internal and external regions. That is, for the internal region, the wideband codebook in the vertical direction is formula (2); and the codebook of the external region is:

$$\mathbf{W}_{V1}=\begin{pmatrix} \mathbf{X}_{V1} & \mathbf{0} \\ \mathbf{0} & \mathbf{X}_{V1} \end{pmatrix} \quad \mathbf{b}_m=\begin{bmatrix} 1 & e^{j\frac{2\pi m}{M'b}} & e^{j\frac{4\pi m}{M'b}} & \cdots & e^{j\frac{2(M-1)\pi m}{M'b}} \end{bmatrix}^T$$

$$\mathbf{X}_{V1}(i_1)=\begin{bmatrix} \mathbf{b}_{D_{i_1}} & \mathbf{b}_{D_{i_1}+\Delta_V} & \cdots & \mathbf{b}_{D_{i_1}+(N_{bV}-1)\Delta_V} \end{bmatrix} \quad i_1 \in \left(0,1,\cdots,N_{V1}-1\right) \tag{15}$$

In the formula group (15), $M'$ represents the number of antenna ports configured for the external region, and $M'$ may be greater than M and be integer multiple of M, or may be less than M and make M be integer multiple of it.

In this embodiment, the division of the internal and external regions is determined by the BS side, for example, according to distances from the BS, an elevation range or a grade level of large-scale related parameters (such as, path loss, coupling loss, received power, Doppler spread, delay spread, angle spread or the like) etc., which is not described herein any further.

Embodiment 14

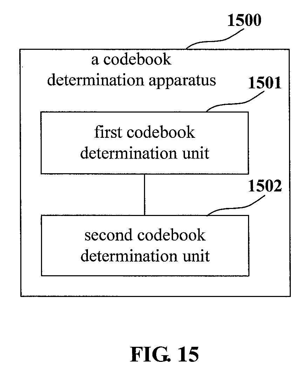

Figure 15 is a schematic diagram of a structure of a codebook determination apparatus of Embodiment 14 of the present disclosure; As shown in Figure 15, a codebook determination apparatus 1500 includes a first codebook determination unit 1501 and a second codebook determination unit 1502; wherein
the first codebook determination unit 1501 is configured to determine a system codebook set; and the second codebook determination unit 1502 is configured to determine, according to the system codebook set and an internal region or an external region of a cell where UE is located, corresponding codebook subsets in the internal region and the external region.

In this embodiment, the codebook subsets of the external region and the internal region are overlapped or not overlapped with each other, and are subsets of the system codebook set.

In this way, UE locates at different regions may only search for the configured codebook subset without searching for the whole codebook, thereby reducing the complexity of UE end and saving signaling overhead. The above method may also be suitable for a situation where a dual-codebook structure for a vertical direction is used, for example, different codebook subsets are configured for wideband codebooks $W_1$ of the internal and external regions.

In this embodiment, from the perspective of the beam, the external region may be provided with corresponding beams, which is described as in Embodiment 12 and not described herein any further.

In this embodiment, the codebook determination apparatus may be provided at the UE side or the BS side. A codebook is determined by the codebook determination apparatus.

Therefore, in this embodiment, UE and a BS which includes the above codebook determination apparatus may also be provided, that is to say, the UE and the BS may not only include the codebook determination apparatus, and also include common technical features to the existing BS or UE, which is as described in the above Embodiments and not described herein any further.

An embodiment of the present disclosure further provides a computer-readable program, wherein when being executed in UE, the program enables a computer to perform the information feedback method as described in embodiments 1, 6, 8 and 11 in the UE.

An embodiment of the present invention further provides a storage medium in which a computer-readable program is stored, wherein the computer-readable program enables a computer to carry out the information feedback method as described in embodiments 1, 6, 8 and 11 in UE.

An embodiment of the present disclosure further provides a computer-readable program, wherein when being executed in a BS, the program enables a computer to perform the information feedback method as described in embodiment 2 in the BS.

An embodiment of the present invention further provides a storage medium in which a computer-readable program is stored, wherein the computer-readable program enables a computer to carry out the information feedback method as described in embodiment 2 in a BS.

An embodiment of the present invention further provides a computer readable program, wherein when being executed in a codebook determination apparatus, the program enables a computer to perform the codebook determination method as described in embodiments 6, 8 and 13 in the codebook determination apparatus.

An embodiment of the present invention further provides a storage medium in which a computer-readable program is stored, wherein the computer-readable program enables a computer to carry out the codebook determination method as described in embodiments 6, 8 and 13 in a codebook determination apparatus.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. For example, the logic device may be a field programmable logic component, a microprocessor, a processor used in a computer, etc. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1.  An information feedback method, comprising:

    feeding back, by User Equipment (UE), related information to a Base Station (BS) when transmission of one or more data streams is supported in both horizontal and vertical directions of an antenna array, the related information comprising two or more pieces of the following information: a number of data streams supported in the vertical direction, a number of data streams supported in the horizontal direction, and a total number of data streams supported by the UE; or

    feeding back, by UE, related information to a BS when a number of data streams supported in a vertical direction is a constant value, the related information comprising any of the following information: a number of data streams supported in a horizontal direction and a total number of data streams supported by the UE; or

    feeding back, by UE, related information to a BS when a number of data streams supported in a horizontal direction is a constant value, the related information comprising any of the following information: a number of data streams supported in a vertical direction and a total number of data streams supported by the UE.

2.  An information feedback method, comprising:

    receiving, by a BS, related information fed back by UE, the related information comprising two or more pieces of the following information: a number of data streams supported in a vertical direction, a number of data streams supported in a horizontal direction, and a total number of data streams supported by the UE; or

    receiving, by a BS, related information fed back by UE when a number of data streams supported in a vertical direction is a constant value, the related information comprising any of the following information: a number of data streams supported in a horizontal direction and a total number of data streams supported by the UE; or

    receiving, by a BS, related information fed back by the UE when a number of data stream supported in a horizontal direction is a constant value, the related information comprising any of the following information: a number of data streams supported in a vertical direction and a total number of data streams supported by the UE.

3.  The method according to claim 2, further comprising:

    determining precoding matrixes in the horizontal and vertical directions according to the related information, or the related information and preset information.

4.  The method according to claim 3, wherein the determining precoding matrixes in the horizontal and vertical directions according to the related information, or the related information and preset information comprises:

    determining the number of data streams in the vertical and horizontal directions according to the related information, or the related information and the preset information; and

    selecting the precoding matrixes in the vertical and horizontal directions, respectively, from a predetermined precoding codebook corresponding to the vertical direction and a predetermined precoding codebook corresponding to the horizontal direction, according to the number of data streams in the vertical and horizontal directions, and precoding matrix indications in the vertical and horizontal directions.

5.  The method according to claim 3, further comprising: determining a composite precoding matrix;
    the determining a composite precoding matrix comprises:

    obtaining an initial composite precoding matrix by using the precoding matrixes in the vertical and horizontal directions, wherein the initial composite precoding matrix has a predetermined number of orthogonal column vectors, and the predetermined number is a product of the number of data streams in the vertical and horizontal directions;

    taking the initial composite precoding matrix as a final composite precoding matrix when the total number of data streams supported by the UE is larger than or equal to the product of the number of data streams supported in the vertical and horizontal directions;

    abandoning, by the BS, among the predetermined number of orthogonal column vectors, a certain number of ones, and taking remaining orthogonal column vectors as a final composite precoding matrix when the total number of data streams supported by the UE is smaller than the product of the number of data streams supported in the vertical and horizontal directions; the certain number being obtained by subtracting the product of the number of data streams supported in the vertical and horizontal directions from the total number of data streams supported by the UE.

6. UE, comprising:

a feedback unit configured to feed back related information to a Base Station (BS) when transmission of one or more data streams is supported in both horizontal and vertical directions of an antenna array, the related information comprising two or more pieces of the following information: a number of data streams supported in the vertical direction, a number of data streams supported in the horizontal direction, and a total number of data streams supported by the UE; or

a feedback unit configured to feed back related information to a BS when a number of data streams supported in a vertical direction is a constant value, the related information comprising any of the following information: a number of data streams supported in a horizontal direction and a total number of data streams supported by the UE; or

a feedback unit configured to feed back related information to a BS when a number of data streams supported in a horizontal direction is a constant value, the related information comprising any of the following information: a number of data streams supported in a vertical direction and a total number of data streams supported by the UE.

7. A BS, comprising:

a first receiving unit configured to receive related information fed back by UE, the related information comprising two or more pieces of the following information: a number of data streams supported in a vertical direction, a number of data streams supported in a horizontal direction, and a total number of data streams supported by the UE; or

a first receiving unit configured to receive related information fed back by UE when a number of data streams supported in a vertical direction is a constant value, the related information comprising any of the following information: a number of data streams supported in a horizontal direction and a total number of data streams supported by the UE; or

a first receiving unit configured to receive related information fed back by the UE when a number of data streams supported in a horizontal direction is a constant value, the related information comprising any of the following information: a number of data streams supported in a vertical direction and a total number of data streams supported by the UE.

8. The BS according to claim 7, further comprising:

a first processing unit configured to determine precoding matrixes in the horizontal and vertical directions according to the related information, or the related information and preset information.

9. The BS according to claim 8, wherein the first processing unit comprises:

a first determination unit configured to determine the number of data streams in the vertical and horizontal directions according to the related information, or the related information and the preset information; and

a second determination unit configured to select the precoding matrixes in the vertical and horizontal directions, respectively, from a predetermined precoding codebook corresponding to the vertical direction and a predetermined precoding codebook corresponding to the horizontal direction, according to the number of data streams in the vertical and horizontal directions, and precoding matrix indications in the vertical and horizontal directions.

10. The BS according to claim 8, further comprising a second processing unit configured to determine a composite precoding matrix, the second processing unit comprising:

a third determination unit configured to obtain an initial composite precoding matrix by using the precoding matrixes in the vertical and horizontal directions, wherein the initial composite precoding matrix has a predetermined number of orthogonal column vectors, and the predetermined number is a product of the number of data streams in the vertical and horizontal directions;

a fourth determination unit configured to take the initial composite precoding matrix as a final composite precoding matrix when the total number of data streams supported by the UE is larger than or equal to the product of the number of data streams supported in the vertical and horizontal directions;

to abandon, among the predetermined number of orthogonal column vectors, a certain number of ones, and to take remaining orthogonal column vectors as a final composite precoding matrix when the total number of data streams supported by the UE is smaller than the product of the number of data streams supported in the vertical and horizontal directions; the certain number being obtained by subtracting the product of the number of data streams supported in the vertical and horizontal directions from the total number of data streams supported by the UE.

11. A codebook determination method, a dual-codebook structure is used for both horizontal and vertical directions of an antenna array, comprising:

determining a long-term and/or wideband codebook by taking a combination of long-term and/or wideband codewords in the horizontal and vertical directions, or taking long-term and/or wideband codewords in the horizontal and vertical directions, as a long-term and/or wideband precoding matrix; and determining an instant and/or narrowband codebook by taking a combination of instant and/or narrowband codewords in the horizontal and vertical directions as an instant and/or narrowband precoding matrix; or
determining a long-term and/or wideband codebook by taking long-term and/or wideband codewords in the horizontal and vertical directions as a wideband precoding matrix, and determining an instant and/or narrowband codebook by taking a combination of instant and/or narrowband codewords in the horizontal and vertical directions as an instant and/or narrowband precoding matrix.

12. A codebook determination method, a dual-codebook structure is used for a horizontal direction of an antenna array and a single-codebook structure is used for a vertical direction thereof, comprising:

determining a long-term and/or wideband codebook by taking a combination of long-term and/or wideband codewords in the horizontal direction and precoding codewords in the vertical direction, or taking long-term and/or wideband codewords in the horizontal direction, as a long-term and/or wideband precoding matrix; and determining an instant and/or narrowband codebook by taking a combination of instant and/or narrowband codewords in the horizontal direction and the precoding codewords in the vertical direction as an instant and/or narrowband precoding matrix; or
determining a long-term and/or wideband codebook by taking long-term and/or wideband codewords in the horizontal direction as a long-term and/or wideband precoding matrix, and determining an instant and/or narrowband codebook by taking a combination of instant and/or narrowband codewords in the horizontal direction and precoding codewords in the vertical direction as an instant and/or narrowband precoding matrix.

13. A codebook determination apparatus, comprising:

a first codebook determination unit configured to determine a long-term and/or wideband codebook by taking a combination of long-term and/or wideband codewords in horizontal and vertical directions, or taking long-term and/or wideband codewords in horizontal and vertical directions, as a long-term and/or wideband precoding matrix; and to determine an instant and/or narrowband codebook by taking a combination of instant and/or narrowband codewords in the horizontal and vertical directions as an instant and/or narrowband precoding matrix; or
to determine a long-term and/or wideband codebook by taking long-term and/or wideband codewords in horizontal and vertical directions as a long-term and/or wideband precoding matrix, and to determine an instant and/or narrowband codebook by taking a combination of instant and/or narrowband codewords in the horizontal and vertical directions as an instant and/or narrowband precoding matrix.

14. A codebook determination apparatus, comprising:

a second codebook determination unit configured to determine a long-term and/or wideband codebook by taking a combination of long-term and/or wideband codewords in a horizontal direction and precoding codewords in a vertical direction, or taking long-term and/or wideband codewords in a horizontal direction, as a long-term and/or wideband precoding matrix; and to determine an instant and/or narrowband codebook by taking a combination of instant and/or narrowband codewords in the horizontal direction and the precoding codewords in the vertical direction as an instant and/or narrowband precoding matrix; or
to determine a long-term and/or wideband codebook by taking long-term and/or wideband codewords in a horizontal direction as a long-term and/or wideband precoding matrix, and to determine an instant and/or narrowband codebook by taking a combination of instant and/or narrowband codewords in the horizontal direction and precoding codewords in a vertical direction as an instant and/or narrowband precoding matrix.

**15.** An information feedback method, comprising:

feeding back to a BS, by UE, serial numbers of determined long-term and/or wideband codebook and instant and/or narrowband codebook in predetermined codebooks according to a feedback type by using a time-frequency resource determined in a feedback mode description, when the UE performs an aperiodic feedback; and feeding back to the BS, by the UE, the serial numbers of the determined long-term and/or wideband codebook and instant and/or narrowband codebook in the predetermined codebooks according to the feedback type separately or in combination with other feedback content by using the time-frequency resource determined in the feedback mode description, when the UE performs a periodic feedback, the predetermined codebooks being determined according to the method of claim 11 or 12.

**16.** UE, comprising:

an information feedback unit configured to feed back to a BS serial numbers of determined long-term and/or wideband codebook and instant and/or narrowband codebook in predetermined codebooks according to a feedback type by using a time-frequency resource determined in a feedback mode description, when the UE performs an aperiodic feedback; and to feed back to the BS the serial numbers of the determined long-term and/or wideband codebook and instant and/or narrowband codebook in the predetermined codebooks according to the feedback type separately and/or in combination with other feedback content by using the time-frequency resource determined in the feedback mode description, when the UE performs a periodic feedback, the predetermined codebooks being determined according to the method of claim 11 or 12.

**17.** An information feedback method, comprising:

jointly encoding, by UE, related indication information concerned in a feedback performed separately in horizontal and vertical directions; and sending jointly encoded information to a network side; wherein, the related indication information comprises one or more pieces of the following information:

a total number of data streams, a rank indication in a horizontal direction, a rank indication in a vertical direction, a precoding matrix indication in a horizontal direction, a precoding matrix indication in a vertical direction and a precoding type indication; or when a dual-codebook structure is used, the related indication information comprises one or more pieces of the following information:

a total number of data streams, a rank indication in a horizontal direction, a rank indication in a vertical direction, a precoding type indication, a long-term and/or wideband precoding matrix indication in a horizontal direction, an instant and/or narrowband precoding matrix indication in a horizontal direction, a long-term and/or wideband precoding matrix indication in a vertical direction, an instant and/or narrowband precoding matrix indication in a vertical direction, a precoding matrix indication taking a combination of long-term and/or wideband codewords in horizontal and vertical directions as a long-term and/or wideband precoding matrix, a precoding matrix indication taking a combination of instant and/or narrowband codewords in horizontal and vertical directions as an instant and/or narrowband precoding matrix, a precoding matrix indication taking a combination of long-term and/or wideband codewords in a horizontal direction and precoding codewords in a vertical direction as a long-term and/or wideband precoding matrix, and a precoding matrix indication taking a combination of instant and/or narrowband codewords in a horizontal direction and precoding codewords in a vertical direction as an instant and/or narrowband precoding matrix.

**18.** UE, comprising:

an encoding unit configured to jointly encode related indication information concerned in a feedback performed separately in horizontal and vertical directions ; and a sending unit configured to send jointly encoded information to a network side; wherein, the related indication information comprises one or more pieces of the following information:

a total number of data streams, a rank indication in a horizontal direction, a rank indication in a vertical direction, a precoding matrix indication in a horizontal direction, a precoding matrix indication in a vertical direction and a precoding type indication; or

when a dual-codebook structure is used, the related indication information comprises one or more pieces of the following information:

a total number of data streams, a rank indication in a horizontal direction, a rank indication in a vertical direction, a precoding type indication, a long-term and/or wideband precoding matrix indication in a horizontal direction, an instant and/or narrowband precoding matrix indication in a horizontal direction, a long-term and/or wideband precoding matrix indication in a vertical direction, an instant and/or narrowband precoding matrix indication in a vertical direction, a precoding matrix indication taking a combination of long-term and/or wideband codewords in horizontal and vertical directions as a long-term and/or wideband precoding matrix, a precoding matrix indication taking a combination of instant and/or narrowband codewords in horizontal and vertical directions as an instant and/or narrowband precoding matrix, a precoding matrix indication taking a combination of long-term and/or wideband codewords in a horizontal direction and precoding codewords in a vertical direction as a long-term and/or wideband precoding matrix, and a precoding matrix indication taking a combination of instant and/or narrowband codewords in a horizontal direction and precoding codewords in a vertical direction as an instant and/or narrowband precoding matrix.

19. A codebook determination method, comprising:

determining a system codebook set; and

determining, according to the system codebook set and an internal region or an external region of a cell where UE is located, corresponding codebook subsets in the internal region and the external region.

20. The method according to claim 19, wherein the codebook subsets of the external region and the internal region are overlapped or not overlapped with each other, and are subsets of the system codebook set.

21. The method according to claim 19, wherein the external region is provided with sparse wave beams, or wider or narrower wave beams than those provided in the internal region.

22. A codebook determination apparatus, comprising:

a first codebook determination unit configured to determine a system codebook set;

a second codebook determination unit configured to determine, according to the system codebook set and an internal region or an external region of a cell where UE is located, corresponding codebook subsets in the internal region and the external region.

23. The apparatus according to claim 22, wherein the codebook subsets of the external region and the internal region are overlapped or not overlapped with each other, and are subsets of the system codebook set.

24. A computer readable program, wherein when being executed in UE, the program enables a computer to perform the information feedback method of claim 1, 15 or 17 in the UE.

25. A storage medium which stores a computer readable program, wherein the computer readable program enables a computer to perform the information feedback method of claim 1, 15 or 17 in UE.

26. A computer readable program, wherein when being executed in a BS, the program enables a computer to perform the information feedback method of any of claims 2-5 in the BS.

27. A storage medium which stores a computer readable program, wherein the computer readable program enables a computer to perform the information feedback method of any of claims 2-5 in a BS.

28. A computer readable program, wherein when being executed in a codebook determination apparatus, the program enables a computer to perform the codebook determination method of any of claims 11-12 and 19-21 in the codebook determination apparatus.

29. A storage medium which stores a computer readable program, wherein the computer readable program enables a computer to perform the codebook determination method of any of claims 11-12 and 19-21 in a codebook determination apparatus.

**FIG. 1**

**FIG. 2**

301

```
┌──────────────────────────────────────────────────┐
│                                                    │
│        receiving, related information fed back by UE │
│                                                    │
└──────────────────────────────────────────────────┘
```

302

```
┌ ─ ─ ─ ─ ─ ─ ─ ─ ─ ─ ─ ─ ─ ─ ─ ─ ─ ─ ─ ─ ─ ─ ─ ┐
│    determining, precoding matrixes in the horizontal and │
│  vertical directions according to the related information, or │
│      the related information and preset information       │
└ ─ ─ ─ ─ ─ ─ ─ ─ ─ ─ ─ ─ ─ ─ ─ ─ ─ ─ ─ ─ ─ ─ ─ ┘
```

303

```
┌ ─ ─ ─ ─ ─ ─ ─ ─ ─ ─ ─ ─ ─ ─ ─ ─ ─ ─ ─ ─ ─ ─ ─ ┐
│                                                   │
│          determining, a composite precoding matrix │
│                                                   │
└ ─ ─ ─ ─ ─ ─ ─ ─ ─ ─ ─ ─ ─ ─ ─ ─ ─ ─ ─ ─ ─ ─ ─ ┘
```

**FIG. 3**

401

```
┌──────────────────────────────────────────────────┐
│   determining the number of data streams in the vertical and │
│      horizontal directions are determined according to the │
│     related information, or the related information and the │
│                    preset information              │
└──────────────────────────────────────────────────┘
```

402

```
┌──────────────────────────────────────────────────┐
│        selecting the precoding matrixes in the vertical and │
│      horizontal directions respectively from a predetermined │
│         precoding codebook corresponding to the vertical │
│       direction and a predetermined precoding codebook │
│   corresponding to the horizontal direction, according to the │
│      number of data streams in the vertical direction and the │
│      number of data streams in the horizontal direction, and │
│   precoding matrix indications in the vertical and horizontal │
│                         directions             │
└──────────────────────────────────────────────────┘
```

**FIG. 4**

**501**

obtaining an initial composite precoding matrix by using the precoding matrixes in the vertical and horizontal directions

**502**

taking the initial composite precoding matrix as a final composite precoding matrix when the total number RI of data streams supported by the UE is larger than or equal to the product of the number of data streams supported in the vertical and horizontal directions

**FIG. 5**

600

604 — input unit

601

606

transceiver

607

memory

602

buffer

application/ function

Data storer

Driver storer

main control circuit

605

audio processing unit

608-2

608-1

display 609

603 — feedback unit

supply power 610

**FIG. 6**

700

Base Station

701

first receiving unit

702

first processing unit

703

second processing unit

**FIG. 7**

702

first processing unit

801

first determination unit

802

second determination unit

**FIG. 8**

703

first processing unit

901

third determination unit

902

fourth determination unit

**FIG. 9**

1000

Base Station

1002

memory

1001

1004

transceiver

1005

1003a

first receiving unit

main control
circuit

1003b

first processing unit

1003c

third processing unit

**FIG. 10**

1101

jointly encoding, by UE, related indication information concerned in a feedback performed separately in horizontal and vertical directions

1102

sending the jointly encoded information to a network side

## FIG. 11

1200

UE

1201

encoding unit

1202

sending unit

## FIG. 12

1301

determining a system codebook set

1302

determining, according to the system codebook set
and an internal region or an external region of a cell
where UE is located, corresponding codebook subsets
in the internal region and the external region

**FIG. 13**

external region

internal region

**FIG. 14**

1500

a codebook
determination apparatus

1501

first codebook
determination unit

1502

second codebook
determination unit

**FIG. 15**

# INTERNATIONAL SEARCH REPORT

| International application No. |
|---|
| PCT/CN2013/084797 |

## A. CLASSIFICATION OF SUBJECT MATTER

H04L 1/00 (2006.01) i

According to International Patent Classification (IPC) or to both national classification and IPC

## B. FIELDS SEARCHED

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

WPI, EPODOC, CNKI, IEEE, CNPAT: antenna, channel state information, CSI, feedback, horizontal, vertical, data stream, data flow, rank indication, number, codebook, period+, joint, coding, RI

## C. DOCUMENTS CONSIDERED TO BE RELEVANT

| Category* | Citation of document, with indication, where appropriate, of the relevant passages | Relevant to claim No. |
|---|---|---|
| X | WO 201116027 A1 (FUJITSU LIMITED) 29 December 2011 (29.12.2011) description, paragraphs [0002]-[0111] and figures 1-9 | 11-18, 24, 25, 28, 29 |
| Y | WO 201116027 A1 (FUJITSU LIMITED) 29 December 2011 (29.12.2011) description, paragraphs [0002]-[0111] and figures 1-9 | 1-10, 24-27 |
| Y | CN 102013956 A (ZTE CORP.) 13 April 2011 (13.04.2011) description, paragraphs [0002]-[0145] and figures 1-4 | 1-10, 24-27 |
| X | WO 2011097971 A1 (FUJITSU LIMITED) 29 December 2011 (29.12.2011) description, paragraphs [0002]-[0128] and figures 1-11 | 19-23, 28, 29 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 June 2014 | 01 July 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHONG, Maojian<br><br>Telephone No. (86-10) 62413360 |

Form PCT/ISA /210 (second sheet) (July 2009)

## INTERNATIONAL SEARCH REPORT
Information on patent family members

International application No.

PCT/CN2013/084797

| Patent Documents referred in the Report | Publication Date | Patent Family | Publication Date |
|---|---|---|---|
| WO 201116027 A1 | 29 December 2011 | CN 102948096 A | 27 February 2013 |
| | | JP 2013531431 A | 01 August 2013 |
| | | US 2013121318 Al | 16 May 2013 |
| CN 102013956 A | 13 April 2011 | WO 2012068880 A1 | 31 May 2012 |
| WO 2011097971 A1 | 18 August 2011 | CN 102742237 A | 17 October 2012 |
| | | US 2013195214 Al | 01 August 2013 |
| | | EP 2536086 Al | 19 December 2012 |

Form PCT/ISA /210 (patent family annex) (July 2009)